(19) **Europäisches Patentamt**

**European Patent Office**

**Office européen des brevets**

(11) **EP 0 910 154 B1**

(12) **EUROPÄISCHE PATENTSCHRIFT**

(45) Veröffentlichungstag und Bekanntmachung des Hinweises auf die Patenterteilung:
**19.03.2003 Patentblatt 2003/12**

(51) Int Cl.⁷: **H02K 19/10**, H02K 16/02, H02K 21/44

(21) Anmeldenummer: **98115793.6**

(22) Anmeldetag: **21.08.1998**

(54) **Reluktanzmotor**

Reluctance motor

Moteur à réluctance

(84) Benannte Vertragsstaaten:
**AT CH DK ES FI FR GB IT LI NL SE**

(30) Priorität: **30.09.1997 DE 19743380**

(43) Veröffentlichungstag der Anmeldung:
**21.04.1999 Patentblatt 1999/16**

(73) Patentinhaber: **EMF 97 Elektro- Maschinen- Vertrieb-Magnettechnik- und Forschungs GmbH 67547 Worms (DE)**

(72) Erfinder: **Lindner, Jürgen, Dr.-Ing. 67550 Worms (DE)**

(74) Vertreter: **Cohausz & Florack Patentanwälte Kanzlerstrasse 8a 40472 Düsseldorf (DE)**

(56) Entgegenhaltungen:
**EP-A- 0 715 397     EP-A- 0 778 653
US-A- 4 639 626     US-A- 4 647 802
US-A- 5 168 190     US-A- 5 424 595**

**Beschreibung**

Die Erfindung betrifft einen Reluktanzmotor mit einem eine Drehstromständerwicklung aufweisenden Ständer zur Erzeugung eines magnetischen Drehfeldes und einem vorwiegend aus ferromagnetischem Material bestehenden, auf einer Welle angeordneten Läufer, wobei der Läufer in einer vorgegebenen Anzahl von in Umfangsrichtung aneinander anschließenden Winkelbereichen gleichen Umfangswinkels vorzugsweise jeweils mindestens ein Paar von dem Ständer zugewandten Flußführungsbereichen mit in Hauptrichtung des Drehfeldes unterschiedlichen Flußführungseigenschaften aufweist und daß der Ständer in einer vorgegebenen Anzahl von in Umfangsrichtung aneinander anschließenden Winkelbereichen gleichen Umfangswinkels vorzugsweise jeweils mindestens ein Paar von dem Läufer zugewandten Flußführungsbereichen mit in Hauptrichtung des Drehfeldes unterschiedlichen Flußführungseigenschaften aufweist.

Reluktanzmotoren sind aus dem Stand der Technik (vgl. z.B. LUEGER, Lexikon der Technik, Band 14, Lexikon der Feinwerktechnik, Seite 315) als selbständig hochlaufende Synchronmotoren bekannt. Der Ständer eines konventionellen Reluktanzmotors unterscheidet sich nicht von dem Ständer eines herkömmlichen Synchron- oder Asynchronmotors, der üblicherweise, ebenso wie der konventionelle Reluktanzmotor, mit Drehstrom betrieben wird. Die Drehstromständerwicklung ist standardmäßig derart aufgebaut, daß die Mittelebene jeder der einer der drei Phasen zugeordneten Spulen auf der Achse des Reluktanzmotors liegt. Beim konventionellen Reluktanzmotor sind ebenso wie beim Synchron- oder Asynchronmotor Wicklungen mit einer Polzahl p größer als zwei und einer Lochzahl q größer als 1 zulässig.

Typischerweise ist die Drehstromständerwicklung eines konventionellen Reluktanzmotors 4-polig ausgeführt. Entsprechend weist der Läufer des konventionellen Reluktanzmotors in vier in Umfangsrichtung aneinander anschließenden Winkelbereichen gleichen Umfangswinkels jeweils ein Paar von dem Ständer zugewandten Flußführungsbereichen mit in Hauptrichtung des Drehfeldes unterschiedlichen Flußführungseigenschaften auf. Bei dem konventionellen Reluktanzmotor werden die Paare von dem Ständer zugewandten Flußführungsbereichen mit in Hauptrichtung des Drehfeldes unterschiedlichen Flußführungseigenschaften in den Winkelbereichen von jeweils 90° dadurch gebildet, daß der Läufer in der Hälfte der Winkelbereiche, also über einen Winkel von 45°, ausgefräst ist. Da die Hauptrichtung des Drehfeldes bei einem Blockläufer stets in radialer Richtung des Läufers weist, entstehen durch die Ausfräsungen im Läufer Flußführungsbereiche mit unterschiedlichen magnetischen Widerständen, also unterschiedlichen Flußführungseigenschaften.

Üblicherweise ist der Läufer eines konventionellen Reluktanzmotors als Käfigläufer ausgebildet.

Deshalb werden beim Betrieb eines konventionellen Reluktanzmotors zwei Drehmomente wirksam. Im Hochlaufbereich entwickelt der konventionelle Reluktanzmotor ein asynchrones Drehmoment, wobei sich aufgrund der Luftspalterweiterungen durch die Ausfräsungen im Läufer eine Verschlechterung der Kennlinien im Vergleich zum unverletzten Läufer eines Induktionsmotors ergibt. Bei synchroner Drehzahl entsteht ein synchrones sogenanntes Reluktanz- oder Reaktionsmoment, weil der mit dem Drehfeld synchron umlaufende Läufer eine solche Stellung einzunehmen versucht, bei welcher die magnetische Energie im Luftspalt am kleinsten ist. Bei Belastung des Motors möchte sich der Läufer in dieser Stellung halten, er muß jedoch um einen kleinen räumlichen Winkel (Polradwinkel) nacheilen. Das höchste Drehmoment ergibt sich bei einem Polradwinkel von 90°/p und wird Außertrittfallmoment genannt. Umgekehrt erfolgt der Übergang von der asynchronen Kennlinie auf den Synchronismus sprunghaft als Synchronisierungsvorgang. Ob dieses dynamische Intrittfallen möglich ist, hängt von dem stationären Lastmoment und dem zu beschleunigenden Trägheitsmoment ab.

Aus den bisherigen Ausführungen ergibt sich, daß der konventionelle Reluktanzmotor mit einer Drehzahl von 6.000/p Umdrehungen pro Minute läuft. Da für eine Vielzahl von Anwendungen deutlich niedrigere Drehzahlen erforderlich sind und da sich die Drehzahl des konventionellen Reluktanzmotors durch Vergrößerung der Polzahl p nur begrenzt reduzieren läßt, werden zur Drehzahlsenkung und/oder Drehmomenterhöhung regelmäßig mechanische Getriebe und/oder elektrische Frequenzwandler eingesetzt. Diese zusätzlichen Funktionsgruppen erhöhen einerseits die Kosten zur Herstellung eines konventionellen Reluktanzmotors mit niedrigen Drehzahlen und beeinträchtigen andererseits den Wirkungsgrad.

Eine Alternative zur Gewährleistung niedriger synchroner Drehzahlen stellt der ebenfalls aus dem Stand der Technik (vgl. z.B. LUEGER, Lexikon der Technik, Band 14, Lexikon der Feinwerktechnik, Seite 315) bekannte untersynchrone Reluktanzmotor dar. Dieser untersynchrone Reluktanzmotor wird einphasig betrieben und weist an seinem Ständer in einer der Anzahl der Winkelbereiche auf dem Läufer entsprechenden Anzahl von in Umfangsrichtung aneinander anschließenden Winkelbereichen gleichen Umfangswinkels jeweils ein Paar von dem Läufer zugewandten Flußführungsbereichen mit in Hauptrichtung des Drehfeldes unterschiedlichen Flußführungseigenschaften auf. Auch bei dem untersynchronen Reluktanzmotor werden die Flußführungsbereiche unterschiedlicher Flußführungseigenschaften durch Ausfräsungen im Ständer erzeugt. Wie bereits erwähnt, entspricht beim untersynchronen Reluktanzmotor die Anzahl der Winkelbereiche im Läufer der Anzahl der Winkelbereiche im Ständer. Die Anzahl der Winkelbereiche $p_{SL}$ kann allerdings unabhängig von der Polzahl der Ständerwicklung gewählt werden. Die Drehzahl des untersynchronen Reluktanzmotors beträgt 3000/$p_{SL}$ Umdrehungen pro Minute.

Der untersynchrone Reluktanzmotor ist nur sehr eingeschränkt einsetzbar, da er auf die Synchron-Drehzahl angeworfen werden muß und dann lediglich ein synchrones, mit doppelter Netzfrequenz von 0 bis zu einem Maximum pulsierendes Drehmoment entwickelt. Entsprechend ist das Außertrittfallmoment des untersynchronen Reluktanzmotors sehr klein.

Neben dem konventionellen Reluktanzmotor und dem untersynchronen Reluktanzmotor ist aus dem Stand der Technik noch der elektronisch geschaltete Reluktanzmotor bekannt (vgl. z.B. Encyclopaedia Britannica CD 97, "Energy Conversion", "Reluctance Motors"). Dieser elektronisch geschaltete Reluktanzmotor arbeitet, wie der Name bereits sagt, mit einem elektronisch geschalteten Gleichstrom. Der elektronisch geschaltete Gleichstrom durchflutet jeweils gleichzeitig zwei Spulenwicklungen auf im Ständer gegenüberliegenden Flußführungsbereichen mit geringem magnetischen Widerstand, also ferromagnetischen Polen. Die Mittelebenen beider Spulenwicklungen verlaufen also tangential zu dem blockförmigen Läufer. Die Anzahlen der Winkelbereiche im Läufer und im Ständer sind bei einem elektronisch geschalteten Reluktanzmotor unterschiedlich, um bei der Schaltung des Gleichstromes von einem Spulenpaar auf ein anderes Spulenpaar ein am Läufer angreifendes Drehmoment zu erzeugen. Da der Gleichstrom dieses Typs eines Reluktanzmotors elektronisch geschaltet ist, lassen sich theoretisch sämtliche Drehzahlen für den Läufer verwirklichen, selbstverständlich ist hierzu allerdings eine elektronische Steuereinheit notwendig. Problematisch ist bei den elektronisch bekannten Reluktanzmotoren jedoch, daß nur relativ geringe Drehmomente übertragen werden können, so daß ein zusätzliches Getriebe erforderlich ist, um die gewünschten Antriebsdrehmomente zu erreichen. Außerdem tritt bei diesen Motoren im unteren Drehzahlbereich häufig eine durch Drehmomentschwankungen bedingte Drehzahlschwankung auf, die durch eine aufwendige elektronische Steuerung korrigiert werden muß.

Ein weiterer geschalteter Reluktanzmotor ist aus der US 5,424,595 A1 bekannt. Bei diesem geschalteten Reluktanzmotor durchflutet der elektronisch geschaltete Gleichstrom jeweils gleichzeitig vier Spulenwicklungen auf ferromagnetischen Polen. Die Mittelebenen dieser Spulenwicklungen verlaufen tangential zu dem blockförmigen Läufer. Durch die gleichzeitige Ansteuerung von verschiedenen Windungen auf den Polen wird der Läufer bei diesem bekannten elektronisch geschalteten Reluktanzmotor in eine Art Magnetlager gehalten.

Aus der US 5,168,190 A1 ist ein weiterer elektronisch geschalteter Reluktanzmotor bekannt, bei dem der elektronisch geschaltete Gleichstrom jeweils gleichzeitig mehrere Spulenwicklungen auf dem Ständer gegenüberliegenden ferromagnetischen Polen durchflutet. Bei diesem geschalteten Reluktanzmotor sind in axialer Richtung mehrere ferromagnetische Pole mit zugeordneten Spulenwicklungen vorgesehen.

Schließlich ist aus der US 4,647,802 A1 ein geschalteter Reluktanzmotor bekannt, welcher sich aufgrund seiner geometrischen Ausgestaltung insbesondere für Servomotorapplikationen eignet.

Aus Nasar et al, Electromechanics and Electric Machines, S. 226 ist schließlich eine Asynchronmaschine mit verteilter Drehstromständerwicklung bekannt.

Ausgehend von dem zuvor erläuterten Stand der Technik liegt der Erfindung die Aufgabe zugrunde, einen Reluktanzmotor zur Verfügung zu stellen, der insbesondere in Bezug auf die Möglichkeiten der Untersetzung und des dynamischen Intrittfallens verbessert ist.

Die zuvor hergeleitete und aufgezeigte Aufgabe ist gemäß einer ersten Lehre der Erfindung dadurch gelöst, daß die Anzahl der Winkelbereiche auf dem Ständer sich von der Anzahl der Winkelbereiche auf dem Läufer um ein ganzzahliges Vielfaches der Polzahl - vorzugsweise der einfachen Polzahl - der Drehstromständerwicklung unterscheidet und daß die Flußführungsbereiche unterschiedlicher Flußführungseigenschaften abwechselnd durch Luft und ferromagnetisches Material von Ständer und Läufer gebildet sind.

Die erfindungsgemäße Ausgestaltung eines Reluktanzmotors gewährleistet eine Untersetzung der Drehzahl des Läufers gegenüber der Drehzahl des Drehfeldes bei gleichzeitiger Erhöhung des Nennmomentes des Reluktanzmotors. Die synchrone Drehzahl des gemäß der ersten Lehre der Erfindung ausgestalteten Reluktanzmotors ergibt sich wie folgt:

$$n_s = f \cdot 120 \frac{w_2 - w_1}{p \cdot w_2}$$

mit

$n_s =$ synchrone Drehzahl in Umdrehungen pro Minute

$f =$ Frequenz des Drehstroms

$w_1 =$ Anzahl der Winkelbereiche auf dem Ständer

$w_2 =$ Anzahl der Winkelbereiche auf dem Läufer

$p =$ Polzahl des Drehstromständerwicklung

Der erfindungsgemäße Reluktanzmotor ermöglicht ohne weiteres Untersetzungen im Bereich von 1:20 und mehr, bei Erhöhungen des Drehmoments beispielsweise um den Faktor 3 bis 5. Der erfindungsgemäße Reluktanzmotor weist also die Eigenschaften eines Getriebemotors auf, ohne daß ein Getriebe erforderlich ist. Er gestattet die Übertragung großer Drehmomente bei kleiner Baugröße, arbeitet mit hohem. Wirkungsgrad und ist mit geringem fertigungstechnischen Aufwand herstellbar. Der erfindungsgemäße Reluktanzmotor weist gute Gleichlaufeigenschaften und im Stillstand, bei einer Gleichstromdurchflutung der Ständerwicklung, ein hohes Haltemoment auf.

Mit dem erfindungsgemäßen Reluktanzmotor sind, wie bereits erwähnt, gegenüber herkömmlichen Elektromotoren sehr hohe Drehmomente erreichbar, wobei das Motorgewicht vergleichsweise klein ist. Diese hohen Drehmomente sind dadurch möglich, daß der Motor Anordnungen mit insgesamt drei unterschiedlichen "Polzahlen" aufweist, wobei eine große Anzahl der vorhandenen Magnetpole gleichzeitig im magnetischen Eingriff der Magnetflußführung stehen. Somit kann in vielen Fällen auf ein Untersetzungsgetriebe verzichtet werden, da die Motoren auch im Bereich kleiner Drehzahlen sehr hohe Drehmomente liefern. Weitere wesentliche Vorteile der erfindungsgemäßen Reluktanzmotoren ergeben sich dadurch, daß sie im Vergleich zu herkömmlichen Motoren sehr gute Rundlaufeigenschaften in Bereichen kleiner Drehzahlen aufweisen und keinen Schlupf, unabhängig von der Belastung und von Spannungsschwankungen, haben. Der erfindungsgemäße Reluktanzmotor kann am Netz und mittels handelsüblichen Frequenzumrichtern (auch ohne Rückführung) betrieben werden. Der Motorstrom verändert sich nur unwesentlich, wenn der Motor belastet oder blokkiert wird, so daß der Motor weder bei Überlast noch im Blockierfall zerstört werden kann.

Bestehen die Flußführungsbereiche geringen magnetischen Widerstandes aus "Zähnen" des ferromagnetischen Materials von Ständer und Läufer und bestehen die Flußführungsbereiche mit hohem magnetischen Widerstand aus den Luftspalten zwischen der "Zähnen" von Ständer und Läufer, so sind sowohl der fertigungstechnische Aufwand als auch die Kosten zur Herstellung der Flußführungsbereiche unterschiedlicher Flußführungseigenschaften sehr gering.

Eine weitere Senkung des fertigungstechnischen Aufwandes ist dadurch.gewährleistet, daß für den Fall, daß die Flußführungsbereiche geringen magnetischen Widerstandes aus ferromagnetischem Material des Ständers gebildet werden, die Anzahl der Winkelbereiche des Ständers der Zahl der Nuten der Drehstromständerwicklung entspricht. In diesem Fall können die Flußführungsbereiche geringen magnetischen Widerstandes direkt als Verlängerung der zwischen den Nuten ohnehin vorhandenen Flußführungsbereiche geringen magnetischen Widerstandes ausgebildet werden.

In der Praxis hat sich gezeigt, daß der erfindungsgemäße Reluktanzmotor besonders gute Eigenschaften im Hinblick auf das Nennmoment und die Gleichlaufeigenschaften aufweist, wenn die Drehstromständerwicklung 2- oder 4 - polig ausgeführt ist.

Weiter hat sich in der Praxis gezeigt, daß die Eigenschaften des erfindungsgemäßen Reluktanzmotors im Hinblick auf das Nennmoment und die Gleichlaufeigenschaften für den Fall verbessert sind, daß die Anzahl der Winkelbereiche auf dem Ständer und dem Läufer deutlich - vorzugsweise mindestens um den Faktor 5 - größer ist als die Polzahl der Drehstromständerwicklung.

Zur Vergrößerung des Nennmomentes ist weiter von Vorteil, wenn die Breiten der Flußführungsbereiche unterschiedlicher Flußführungseigenschaften auf dem Bauteil mit der höchsten Anzahl von Winkelbereichen im wesentlichen übereinstimmen und gleichzeitig die Breiten der durch ferromagnetisches Material gebildeten Flußführungsbereiche auf den verbleibenden Bauteilen den Breiten auf dem Bauteil mit der höchsten Anzahl von Winkelbereichen entspricht.

Weisen der Ständer und der Läufer jeweils mindestens eine weitere Lage von Flußführungsbereichspaaren mit in Hauptrichtung des Drehfeldes abwechselnd unterschiedlichen Flußführungseigenschaften auf und folgen die Lagen von Ständer und Läufer abwechselnd aufeinander, so ist eine deutliche Erhöhung des Nennmoments des erfindungsgemäßen Reluktanzmotors gewährleistet. Dies läßt sich einfach dadurch begründen, daß die magnetischen Kräfte bei der geschilderten Ausgestaltung des erfindungsgemäßen Reluktanzmotors an einer doppelten Anzahl von Flußführungselementen mit geringem magnetischem Widerstand angreifen.

Ein optimales Verhältnis zwischen Nennmoment und Materialaufwand für die Fußführungsbereiche erhält man, wenn einerseits gewährleistet ist, daß die aus ferromagnetischem Material bestehenden zwischen zwei weiteren Lagen des Läufers oder Ständers liegenden Flußführungsbereiche einer Lage des Ständers oder Läufers in der Hauptrichtung des Drehfeldes etwa so hoch wie breit sind und/oder andererseits gewährleistet ist, daß die aus ferromagnetischem Material bestehenden in unmittelbarer Nähe zu den Rückschlußelementen von Ständer oder Läufer angeordneten Flußführungsbereiche des Ständers oder Läufers in der Hauptrichtung des Drehfeldes etwa halb so hoch wie breit sind.

Da die Kräfte, die bestrebt sind die magnetische Energie im Luftspalt des Reluktanzmotors kleinzuhalten, an den Flußführungsbereichen geringen magnetischen Widerstandes des Läufers angreifen, ist es bei gleicher Baugröße vorteilhaft, den Läufer als Außenläufer auszubilden, da in diesem Fall die angreifenden Kräfte aufgrund der besseren Hebelverhältnisse ein höheres Moment aufbringen.

Alternativ zu der Ausgestaltung der Flußführungsbereiche unterschiedlicher Flußführungseigenschaften abwechselnd durch Luft und ferromagnetisches Material, ist es gemäß einer zweiten Lehre der Erfindung vorteilhaft, daß die Anzahl der Winkelbereiche auf dem Ständer sich von der Anzahl der Winkelbereiche auf dem Läufer um ein ganzzahliges Vielfaches der Polzahl der Drehstromständerwicklung unterscheidet, dass die Flußführungsbereiche unterschiedlicher Flußführungseigenschaften durch in Hauptrichtung des Drehfeldes entgegengesetzt gepolte, entweder am Ständer angeordnete Permamentmagnete gebildet sind, wobei die Flußführungsbereiche am Läufer abwechselnd durch Luft und ferromagnetisches Material gebildet sind, oder am Läufer angeordnete Permanentmegnete gebildet sind, wobei die Flußführungsbereiche am Ständer abwechselnd durch Luft und ferromagnetisches Material gebildet sind. Diese Ausgestaltung der Flußführungsbereiche erhöht bei ansonsten gleicher geometrischer Auslegung das Nennmoment des erfindungsgemäßen Reluktanzmotors, verursacht jedoch gleichzeitig höhere Herstellungskosten.

Ein erfindungsgemäßer Reluktanzmotor , bei dem die Flußführungsbereiche unterschiedlicher Flußführungseigenschaften entweder am Ständer oder am Läufer durch in Hauptrichtung des Drehfeldes entgegengesetzt gepolte Permanentmagnete gebildet sind, verhält sich im Hinblick auf sein Nennmoment und seine Gleichlaufeigenschaften dann optimal, wenn die Differenz der Anzahl der Winkelbereiche auf dem Ständer und dem Läufer einem ganzzahligen Vielfachen der Polpaarzahl - vorzugsweise der einfachen Polpaarzahl - der Drehstromständerwicklung entspricht. Praktisch bedeutet dies, daß sich ein 4-poliger erfindungsgemäßer Reluktanzmotor, bei dem am Ständer oder am Läufer Permanentmagnete angeordnet sind, dann optimal verhält, wenn die Differenz der Anzahl der Winkelbereiche auf dem Ständer und dem Läufer zwei ist. Mit dieser Differenz ist ein 4-poliger erfindungsgemäßer Reluktanzmotor, bei welchem die Flußführungsbereiche unterschiedlicher Flußführungseigenschaften auf dem Ständer und dem Läufer durch Luft und ferromagnetisches Material gebildet sind, nicht funktionsfähig.

Ein erfindungsgemäßer Reluktanzmotor, bei dem die Flußführungsbereiche unterschiedlicher Flußführungseigenschaften durch in Hauptrichtung des Drehfeldes entgegengesetzt gepolte, entweder am Ständer oder am Läufer angeordnete Permanentmagnete gebildet sind, verhält sich auch im Hinblick auf das optimale Verhältnis von Nennmoment und Materialaufwand abweichend. Ein optimales Verhältnis zwischen Nennmoment und Materialaufwand ist bei einem derart ausgestalteten Reluktanzmotor dadurch gewährleistet, daß die aus ferromagnetischem Material bestehenden, in unmittelbarer Nähe zu den Rückschlußelementen von Ständer oder Läufer angeordneten Flußführungsbereiche, die Flußführungsbereiche bestehend aus in Hauptrichtung des Drehfeldes entgegengesetzt gepolten Permanentmagneten am Läufer oder Ständer zugeordnet sind, in Hauptrichtung des Drehfeldes etwa so hoch wie breit sind.

Die Untersetzungsverhältnisse, die sich mit der bislang beschriebenen einstufigen Untersetzung realisieren lassen, sind de facto dadurch nach oben begrenzt, daß sich beliebig hohe Anzahlen von Winkelbereichen auf Ständer und Läufer zum einen fertigungstechnisch nicht ohne weiteres realisieren lassen und zum anderen im Hinblick auf die Größe des Nennmomentes problematisch werden. Höhere Untersetzungsverhältnisse werden demzufolge gemäß einer weiteren Ausgestaltung der ersten Lehre der Erfindung dadurch zur Verfügung gestellt, daß zwischen Ständer und Läufer ein auf der Welle schwimmend gelagerter Untersetzungsläufer angeordnet ist, daß der Untersetzungsläufer auf seiner dem Ständer zugewandten Fläche in einer vorgegebenen Anzahl von in Umfangsrichtung aneinander anschließenden Winkelbereichen gleichen Umfangswinkels vorzugsweise jeweils ein Paar von Flußführungsbereichen mit in Hauptrichtung des Drehfeldes unterschiedlichen Flußführungseigenschaften aufweist, daß der Untersetzungsläufer auf seiner dem Läufer zugewandten Fläche in einer vorgegebenen Anzahl von in Umfangsrichtung aneinander anschließenden Winkelbereichen gleichen Umfangswinkels vorzugsweise jeweils ein Paar von Flußführungsbereichen mit in Hauptrichtung des Drehfeldes unterschiedlichen Flußführungseigenschaften aufweist und daß die Differenz der Anzahl der Winkelbereiche auf dem Ständer und der Anzahl der Winkelbereiche auf der dem Ständer zugewandten Fläche des Untersetzungsläufers der Differenz der Anzahl der Winkelbereiche auf der dem Läufer zugewandten Fläche des Untersetzungsläufers und der Anzahl der Winkelbereiche auf dem Läufer und einem ganzzahligen Vielfachen der Polzahl - vorzugsweise der einfachen Polzahl - der Drehstromständerwicklung entspricht. Durch den wie beschrieben ausgestalteten Untersetzungsläufer ist gewährleistet, daß sich der Reluktanzmotor trotz hoher Frequenzen des Ständerstroms sehr langsam und gleichförmig dreht. Die beschriebene Ausgestaltung gewährleistet weiter, daß der mit der Welle verbundene Läufer ein sehr geringes wirksames Trägheitsmoment aufweist.

Gemäß einer weiteren Ausgestaltung ist der erfindungsgemäße Reluktanzmotor dadurch weitergebildet, daß der Läufer die Flußführungsbereiche und Verbindungselemente zur Verbindung mit der Welle umfaßt und daß ein auf der Welle schwimmend gelagerter Flußführungsläufer aus ferromagnetischem Material zum Rückschluß der Feldlinien des Drehfeldes vorgesehen ist.

Durch die soeben beschriebene vorgesehene Trennung der Funktionen Drehmomentaufnahme und Rückschluß der Feldlinien läßt sich das Trägheitsmoment des Läufers deutlich reduzieren. Damit ist auch das dynamische Intrittfallen des Reluktanzmotors erleichtert. Im stationären Betrieb nimmt der Flußführungsläufer dann eine Drehzahl in der Nähe der synchronen Drehzahl des Läufers an, so daß die Wirbelstromverluste reduziert sind.

Da insbesondere als Innenläufer ausgebildete Läufer ein hohes Trägheitsmoment aufweisen, ist der Läufer dadurch vorteilhaft ausgestaltet, daß der Innenläufer als Hohlzylinder ausgebildet ist und daß innerhalb des Innenläufers ein auf der Motorwelle schwimmend gelagerter, als Vollzylinder ausgebildeter Flußführungsläufer aus ferromagnetischem Material vorgesehen ist.

Zur Reduzierung von Wirbelstromverlusten sind die aus ferromagnetischem Material bestehenden Flußführungsbereiche vorteilhafterweise aus gegeneinander isolierten Elektroblechen aufgebaut.

Eine positive Beeinflussung des Betriebs- und Geräuschverhaltens des erfindungsgemäßen Reluktanzmotors ist dadurch gewährleistet, daß die Flußführungsbereiche im Ständer und/oder im Läufer in Drehrichtung geschrägt verlaufen. Durch diesen geschrägten Verlauf der Flußführungsbereiche ist ein gleichmäßigerer Verlauf des Nennmomentes gewährleistet.

Speziell für den Fall, daß der erfindungsgemäße Reluktanzmotor eine kurze Baulänge aufweisen soll, ist es vorteilhaft, wenn Ständer und Läufer einen radialen Luftspalt einschließen, der Reluktanzmotor also als Scheibenläufer ausgeführt ist.

Schlußendlich erfährt der erfindungsgemäße Reluktanzmotor eine weitere vorteilhafte Ausgestaltung dadurch, daß auf der Welle ein Geber oder Resolver angeordnet ist. Mit Hilfe dieses Gebers oder Resolvers steuert eine Steuereinheit einen Frequenzumrichter derart, daß das Außertrittfallen des erfindungsgemäßen Reluktanzmotors bei Belastung verhindert wird, so daß sich im Ergebnis für den erfindungsgemäßen Reluktanzmotor eine Kennlinie ähnlich der Kennlinie eines Gleichstrommotors ergibt.

Im einzelnen gibt es nun eine Vielzahl von Möglichkeiten, den erfindungsgemäßen Reluktanzmotor auszugestalten und weiterzubilden. Dazu wird einerseits auf die dem Patentanspruch 1 nachgeordneten Patentansprüche sowie andererseits auf die Beschreibung von bevorzugten Ausführungsbeispielen in Verbindung mit der Zeichnung verwiesen. In der Zeichnung zeigt

Fig. 1 a), b)  ein erstes Ausführungsbeispiel eines erfindungsgemäßen Reluktanzmotors in einem Schnitt quer zur Wellenachse und einem Schnitt längs der Wellenachse,

Fig. 2 a), b)  ein zweites Ausführungsbeispiel eines erfindungsgemäßen Reluktanzmotors in einem Schnitt quer zur Wellenachse und einem Schnitt längs der Wellenachse,

Fig. 3 a), b)  ein drittes Ausführungsbeispiel eines erfindungsgemäßen Reluktanzmotors in einem Schnitt quer zur Wellenachse und einem Schnitt längs der Wellenachse,

Fig. 4 a), b)  ein viertes Ausführungsbeispiel eines erfindungsgemäßen Reluktanzmotors in einem Schnitt quer zur Wellenachse und einem Schnitt längs der Wellenachse,

Fig. 5 a), b)  ein fünftes Ausführungsbeispiel eines erfindungsgemäßen Reluktanzmotors in einem Schnitt quer zur Wellenachse und einem Schnitt längs der Wellenachse,

Fig. 6 a), b)  ein sechstes Ausführungsbeispiel eines erfindungsgemäßen Reluktanzmotors in einem Schnitt quer zur Wellenachse und einem Schnitt längs der Wellenachse,

Fig. 7 a), b)  ein siebtes Ausführungsbeispiel eines erfindungsgemäßen Reluktanzmotors in einem Schnitt quer zur Wellenachse und einem Schnitt längs der Wellenachse,

Fig. 8  vergrößert einen Abschnitt eines Flußführungsbereiches eines erfindungsgemäßen Reluktanzmotors,

Fig. 9  ein Ausführungsbeispiel eines Läufers eines erfindungsgemäßen Reluktanzmotors in einer perspektivischen Ansicht,

Fig. 10 a), b)  ein achtes Ausführungsbeispiel eines erfindungsgemäßen Reluktanzmotors in einem Schnitt quer zur Wellenachse und einem Schnitt längs der Wellenachse,

Fig. 11 a), b)  ein neuntes Ausführungsbeispiel eines erfindungsgemäßen Reluktanzmotors in einem Schnitt quer zur Wellenachse und einem Schnitt längs der Wellenachse.

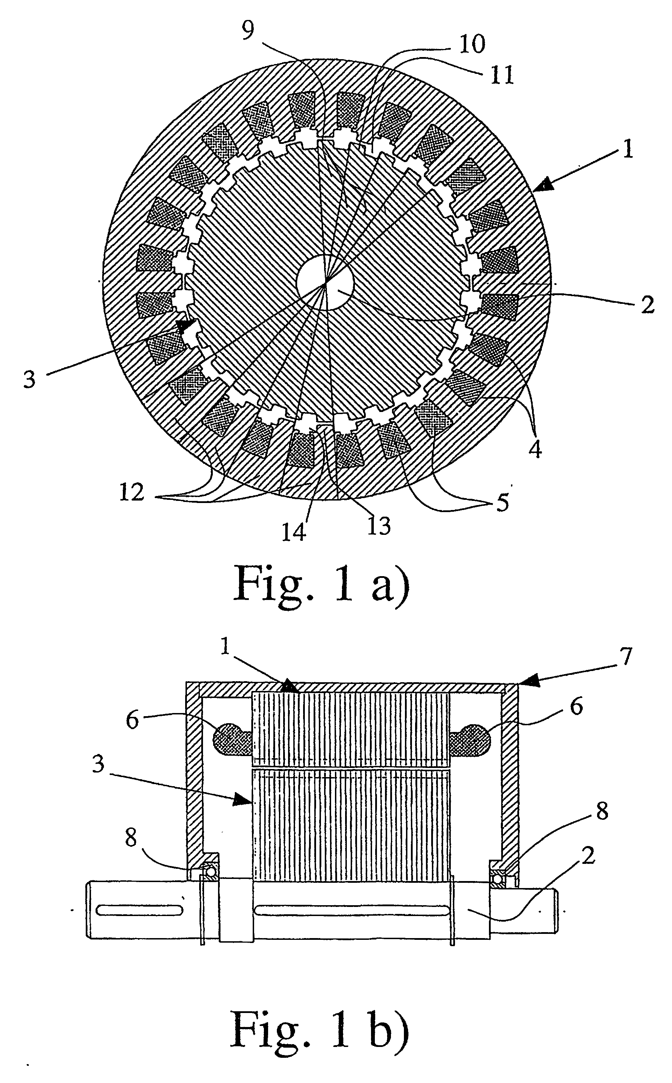

In Fig. 1 ist ein erstes Ausführungsbeispiel eines erfindungsgemäßen Reluktanzmotors dargestellt. Das dargestellte erste Ausführungsbeispiel weist einen eine Drehstromständerwicklung aufweisenden Ständer 1 zur Erzeugung eines magnetischen Drehfeldes und einen aus ferromagnetischem Material bestehenden, auf einer Welle 2 angeordneten Läufer 3 auf. Bei der Drehstromständerwicklung des Ständers 1 handelt es sich um eine 4-polige Wicklung mit einer Lochzahl von q = 2, so daß im Ständer vierundzwanzig Nuten 4 zur Aufnahme der Drehstromständerwicklung vorgesehen sind. Entsprechend erkennt man in Fig. 1 a) geschnitten die einzelnen Spulenwicklungen 5 der Drehstromständerwicklung. In Fig. 1 b) sind demgegenüber nur die Wickelköpfe 6 der Drehstromständerwicklung im Schnitt dargestellt.

Aus Fig. 1 b) ist ersichtlich, daß die Welle 2 in dem mit dem Ständer 1 drehfest verbundenen Gehäuse 7 über Lager 8 drehbar gelagert ist.

Die Ausführung des in Fig. 1 a) dargestellten Läufers 3 entspricht prinzipiell, bis auf die Anzahl der Winkelbereiche, der Ausführung der aus dem Stand der Technik bekannten Läufer von konventionellen Reluktanzmotoren. Der Läufer 3 weist in achtundzwanzig in Umfangsrichtung aneinander anschließenden Winkelbereichen 9 gleichen Umfangswinkel jeweils ein Paar von dem Ständer 1 zugewandten Flußführungsbereichen 10, 11 mit in Hauptrichtung der Drehfeldes unterschiedlichen Flußführungseigenschaften auf. Es soll an dieser Stelle darauf hingewiesen werden, daß es bei einem erfindungsgemäßen Reluktanzmotor vorteilhaft ist, wenn das ferromagnetische Material des Läufers 3 magnetisch möglichst weich ist, d.h. eine möglichst geringe Koerzitivfeldstärke aufweist, da die Flußführungsbereiche 10 im Gegensatz zu den Flußführungsbereichen konventioneller Reluktanzmotoren regelmäßig umgepolt werden. Eine hohe Koerzitivfeldstärke würde zu hohen Wirbelstromverlusten im Läufer 3 führen.

Erfindungsgemäß weist der Ständer 1 in vierundzwanzig in Umfangsrichtung aneinander anschließenden Winkelbereichen 12 gleichen Umfangswinkels, wie der Läufer 3, jeweils ein Paar von dem Läufer 3 zugewandten Flußführungsbereichen 13, 14 mit in Hauptrichtung des Drehfeldes unterschiedlichen Flußführungseigenschaften auf.

Die Flußführungsbereiche 10, 11 auf dem Läufer 3 erstrecken sich ebenso wie die Flußführungsbereiche 13, 14 auf dem Ständer 1, wie in Fig. 1 b) angedeutet, über die gesamte axiale Länge von Ständer 1 und Läufer 3.

Theoretisch ist es auch möglich, daß sich die Flußführungsbereiche 12, 13 auf dem Ständer 1 und/oder die Flußführungsbereiche 10,11 auf dem Läufer 3 nicht über die gesamte axiale Länge von Ständer 1 und Läufer 3 erstrecken. Auch ist es theoretisch denkbar, daß nicht sämtliche Winkelbereiche 9 des Läufers 3 oder Winkelbereiche 12 des Ständers 1 Paare von Flußführungsbereichen mit in Hauptrichtung des Drehfeldes unterschiedlichen Flußführungseigenschaften aufweisen. Diese theoretisch möglichen Änderungen gegenüber dem in Fig. 1 dargestellten ersten Ausführungsbeispiel eines erfindungsgemäßen Reluktanzmotors führen allerdings nur zu einer Verschlechterung der Funktion.

Bei dem in Fig. 1 dargestellten ersten Ausführungsbeispiel eines erfindungsgemäßen Reluktanzmotors bestehen die Flußführungsbereiche 10, 13 geringen magnetischen Widerstandes aus angestanztem ferromagnetischem Material des Ständers 1 und des Läufers 3. Alternativ ist ebenfalls denkbar, daß insbesondere die Flußführungsbereiche 13 geringen magnetischen Widerstandes des Ständers 1 eingeklebt sind. Ein derartiges Einkleben ermöglicht auch die Umrüstung bereits vorhandener Ständer zum Einsatz in Verbindung mit einem erfindungsgemäßen Reluktanzmotor. Das Anstanzen der Flußführungsbereiche 13 mit geringem magnetischem Widerstand aus dem ferromagnetischem Material des Ständers ist bei dem in Fig. 1 dargestellten ersten Ausführungsbeispiel besonders praktikabel, da die Anzahl der Winkelbereiche 12 des Ständers 1 der Zahl der Nuten 4 der Drehstromständerwicklung entspricht.

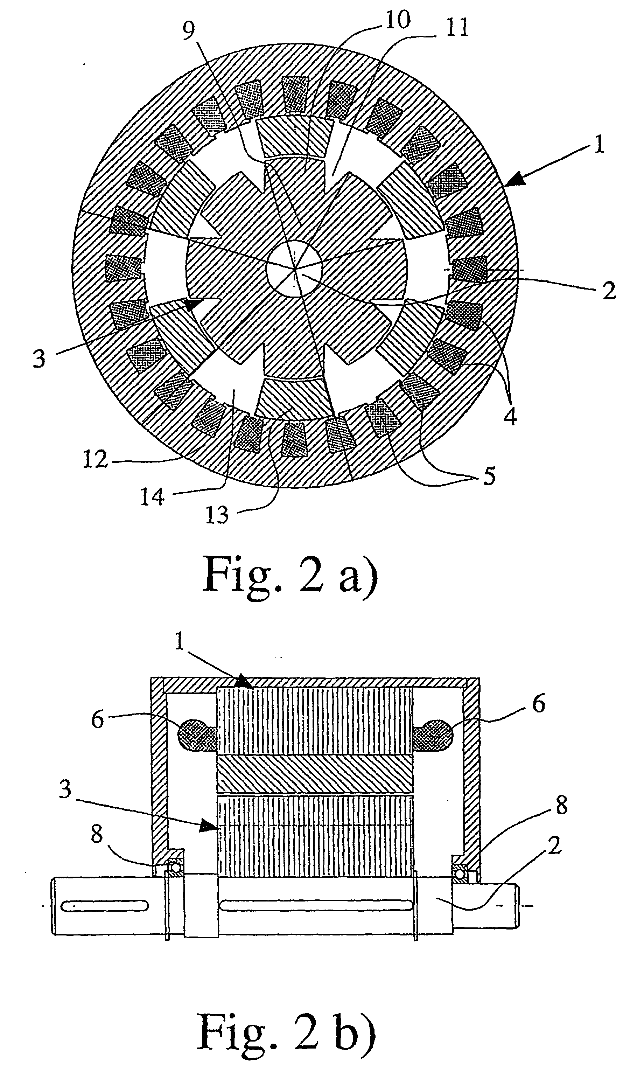

Bei dem in Fig. 1 dargestellten ersten Ausführungsbeispiel ist sowohl die Anzahl der Winkelbereiche 9, 12 auf Ständer 1 und Läufer 3 deutlich größer als die Polzahl der Drehstromständerwicklung als auch die Breiten der Flußführungsbereiche 10, 11 auf dem Läufer 3 als Bauteil mit der höchsten Anzahl von Winkelbereichen 9 im wesentlichen übereinstimmen und die Breiten der durch ferromagnetisches Material gebildeten Flußführungsbereiche auf dem Ständer 1 als verbleibendes Bauteil den Breiten auf dem Läufer 3 als Bauteil mit der höchsten Anzahl von Winkelbereichen 9 entsprechen. Insofern ist das in Fig. 1 dargestellte erste Ausführungsbeispiel im Hinblick auf das Nennmoment und die Gleichlaufeigenschaften optimal gestaltet. Die zuletzt beschriebenen vorteilhaften Ausgestaltungen eines erfindungsgemäßen Reluktanzmotors werden von dem in Fig. 2 dargestellten zweiten Ausführungsbeispiel eines Reluktanzmotors nur unvollständig oder überhaupt nicht erfüllt. Trotzdem ist das in der Fig. 2 dargestellte zweite Ausführungsbeispiel ohne weiteres funktionstüchtig.

In Fig. 2 sind, wie in den folgenden Figuren, sämtliche Bauteile übereinstimmender Funktion mit denselben Bezugszeichen wie in Fig. 1 bezeichnet.

Die Drehstromständerwicklung ist bei dem in Fig. 2 dargestellten zweiten Ausführungsbeispiel als 2-polige Wicklung mit einer Lochzahl von q=4 ausgeführt. Wie man ohne weiteres erkennen kann, ist die Anzahl der Winkelbereiche 9 auf dem Läufer 3 gleich acht, während die Anzahl der Winkelbereiche 12 auf dem Ständer 1 gleich sechs ist. Somit ergibt sich für das zweite Ausführungsbeispiel ein Untersetzungsverhältnis von 1:4. Demgegenüber betrug das Untersetzungsverhältnis bei dem ersten Ausführungsbeispiel 1:14.

Das in Fig. 2 dargestellte zweite Ausführungsbeispiel eines erfindungsgemäßen Reluktanzmotors eignet sich besonders zum Umrüsten vorhandener Motoren, da die aus ferromagnetischem Material bestehenden Flußführungsbereiche 13 aufgrund ihrer Größe besonders einfach in einen bestehenden Ständer 1 eingeklebt werden können.

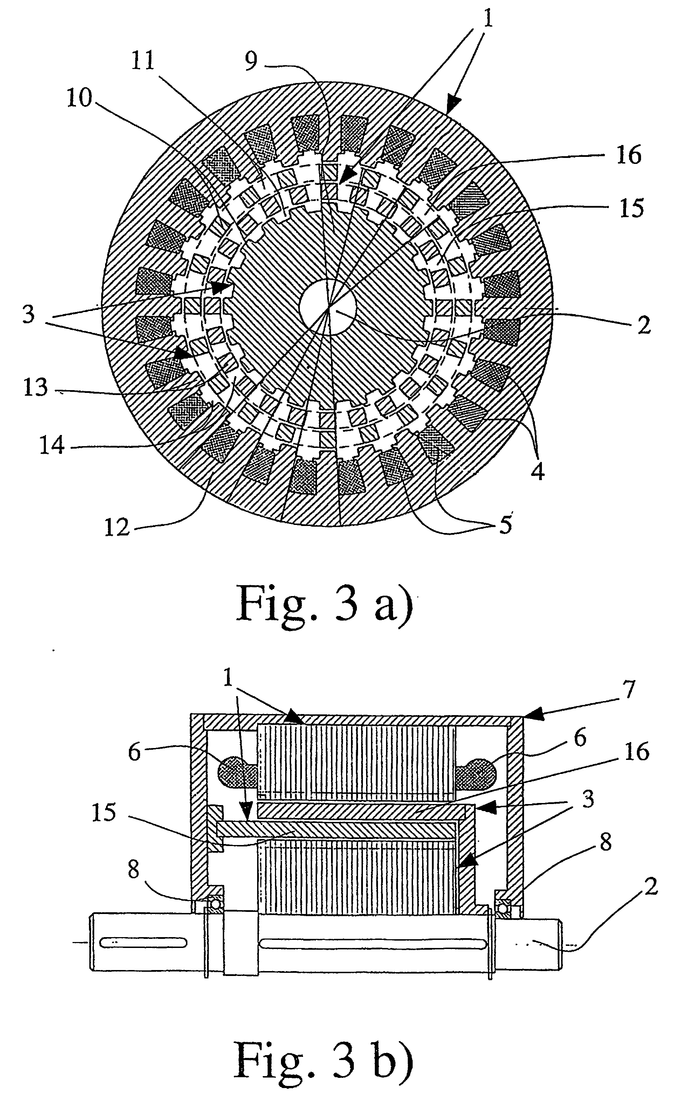

Da sowohl in dem ersten Ausführungsbeispiel als auch in dem zweiten Ausführungsbeispiel die Anzahl der Winkelbereiche 9 auf dem Läufer 3 größer ist als die Anzahl der Winkelbereiche 12 auf dem Ständer 1, drehen sich in beiden Fällen die Läufer 3 in Richtung des magnetischen Drehfeldes. Für den umgekehrten Fall, also Anzahl der Winkelbereiche 9 auf dem Läufer 3 geringer als Anzahl der Winkelbereiche 12 auf dem Ständer 1 dreht sich der Läufer 3, wie z.B. bei dem in Fig. 3 dargestellten dritten Ausführungsbeispiel, gegen die Drehrichtung des magnetischen Drehfeldes.

Die Drehstromständerwicklung des in Fig. 3 dargestellten dritten Ausführungsbeispiels entspricht der Drehstromständerwicklung des in Fig. 1 dargestellten ersten Ausführungsbeispiels. Wie ohne weiteres ersichtlich, weist der Läufer 3 des dritten Ausführungsbeispiels zwanzig Winkelbereiche 9 auf, während der Ständer 1 des dritten Ausführungsbeispiels vierundzwanzig Winkelbereiche 12 aufweist. Somit ergibt sich ein Untersetzungsverhältnis von 1:10, wobei sich der Läufer 3 gegen die Richtung des magnetischen Drehfeldes dreht.

Darüber hinaus weisen in dem in Fig. 3 dargestellten dritten Ausführungsbeispiel der Ständer 1 und der Läufer 3 jeweils eine weitere Lage 15, 16 von Flußführungsbereichspaaren mit in Hauptrichtung des Drehfeldes abwechselnd unterschiedlichen Flußführungseigenschaften auf, wobei die Lagen abwechselnd aufeinander folgen. Bei dem in Fig. 3 dargestellten dritten Ausführungsbeispiel liegen also in jedem Winkelbereich 12, 9 von Ständer 1 und Läufer 3 zwei Paare von Flußführungsbereichen mit in Hauptrichtung des Drehfeldes unterschiedlichen Flußführungseigenschaften auf unterschiedlichen Radien. Da somit die durch das aufgrund der zusätzlichen Luftspalte zwar abgeschwächte Magnetfeld an den Flußführungsbereichen 10 des Läufers 3 aus ferromagnetischem Material angreifenden Kräfte nahezu zweifach angreifen, erhöht sich das Nennmoment des erfindungsgemäßen Reluktanzmotors durch die beschriebene Maßnahme deutlich.

Eine denkbare Befestigung der Lage 15 des Ständers 1 an dem Gehäuse 7 ist in Fig. 3b) dargestellt. In Fig. 3b) ist ebenfalls eine denkbare Befestigung der Lage 16 des Läufers 3 auf der Welle 2 dargestellt. Man erkennt in Fig. 1b) schließlich auch, daß sich die Lagen 15, 16 über die gesamte axiale Länge von Ständer 1 und Läufer 3 erstrecken.

Den praktischen Erfahrungen zum optimalen Verhältnis vom erzielten Drehmoment zum Materialaufwand folgend, sind die aus ferromagnetischem Material bestehenden Flußführungsbereiche 10, 13, die sich zwischen zwei weiteren Lagen des Ständers 1 oder des Läufers 3 befinden, in der Hauptrichtung des Drehfeldes etwa so hoch wie breit. Hier werden die unmittelbar am Ständer 1 oder Läufer 3 angeordneten Flußführungsbereiche 10, 11, 13, 14 ebenfalls jeweils als Lagen bezeichnet. Für diese ebenfalls aus ferromagnetischem Material bestehenden, in unmittelbarer Nähe zu den Rückschlußelementen des Ständers 1 oder Läufers 3 angeordneten Flußführungsbereiche 13, 10 des Ständers 1 und Läufers 3 gilt bei dem in Fig. 3 dargestellten dritten Ausführungsbeispiel, daß sie in der Hauptrichtung des Drehfeldes etwa halb so hoch wie breit sind. Bei diesem Verhältnis gilt für die in unmittelbarer Nähe zu den Rückschlußelementen von Ständer 1 oder Läufer 3 angeordneten Flußführungsbereiche 13, 10, daß das Verhältnis von Nennmoment zu Materialaufwand optimiert ist.

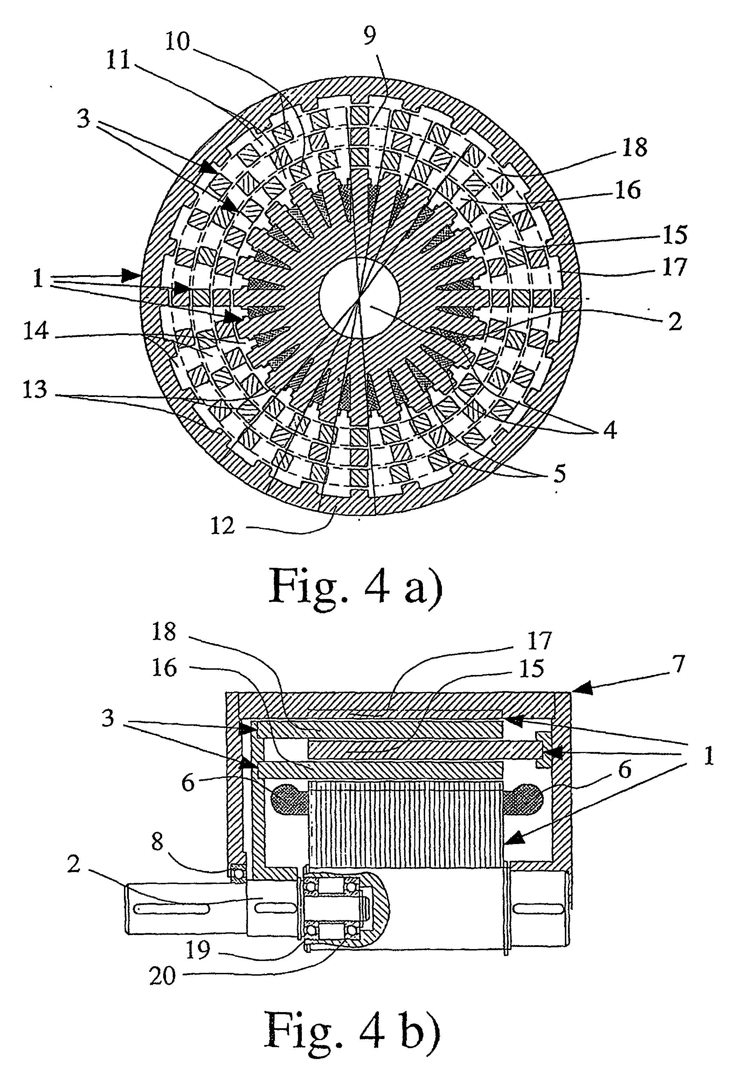

Aus der bereits geschilderten Tatsache, daß die magnetischen Kräfte an den aus ferromagnetischem Material bestehenden Flußführungsbereichen angreifen, folgt, daß es zur Maximierung des Nennmomentes zweckmäßig ist, den Läufer als Außenläufer auszubilden. Ein viertes Ausführungsbeispiel eines erfindungsgemäßen Reluktanzmotors, bei dem der Läufer 3 als Außenläufer ausgebildet ist, ist in Fig. 4 dargestellt.

Bei dem in Fig. 4 dargestellten vierten Ausführungsbeispiel besteht der Ständer 1 aus einem bekannten Innenständer mit einer 4-poligen Drehstromständerwicklung mit einer Lochzahl q=2, wobei erfindungsgemäß zwischen den Nuten 4 aus ferromagnetischem Material bestehende Flußführungsbereiche 13 vorgesehen sind. Darüber hinaus weist der Ständer 1 zwei weitere Lagen 15, 17 von Flußführungsbereichspaaren auf. Der Läufer 3 besteht in dem vierten Ausführungsbeispiel aus zwei Lagen 16, 18 von Flußführungsbereichspaaren. In diesem vierten Ausführungsbeispiel weist also der Läufer 3 keine Rückschlußelemente für das magnetische Drehfeld auf. Die Rückschlußelemente werden nur von dem Ständer 1 gebildet. Entsprechend ist das Trägheitsmoment des Läufers 3 reduziert, was das dynamische Intrittfallen des Reluktanzmotors gemäß der ersten Lehre der Erfindung erleichtert.

Das Untersetzungsverhältnis des vierten Ausführungsbeispiels eines erfindungsgemäßen Reluktanzmotors beträgt 1:14 und stimmt somit mit dem Übersetzungsverhältnis des ersten Ausführungsbeispiels überein. Dies resultiert aus den ebenfalls übereinstimmenden Anzahlen der Winkelbereiche 12, 9 in Ständer 1 und Läufer 3.

In Fig. 4b) ist dargestellt, wie eine mögliche Befestigung des Läufers 3 auf der Welle 2 aussehen kann.

Die Welle 2 ist dabei über zusätzliche Lager 19, 20 gegenüber dem Ständer 1 drehbar gelagert.

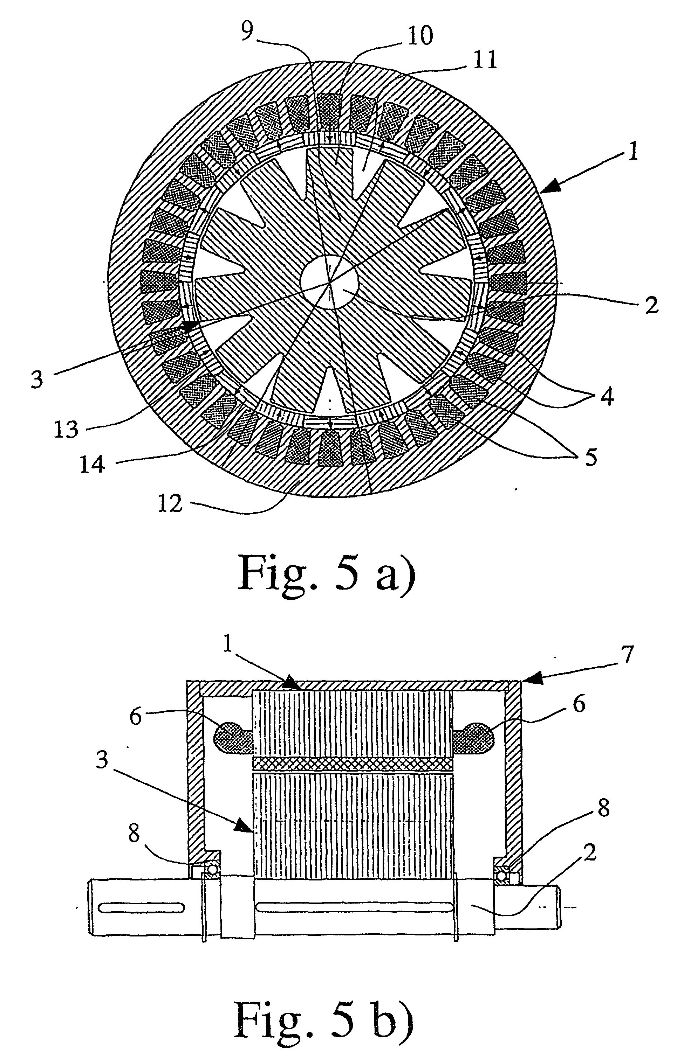

Bei dem in Fig. 5 dargestellten fünften Ausführungsbeispiel eines erfindungsgemäßen Reluktanzmotors bestehen nun die Flußführungsbereiche 13, 14 unterschiedlicher Flußführungseigenschaften am Ständer 1 im Gegensatz zu den bislang beschriebenen Ausführungsbeispielen aus in Hauptrichtung des Drehfeldes entgegengesetzt gepolten Permanentmagneten. Die entgegengesetzte Polung der Permanentmagnete ist in Fig. 5a) durch unterschiedliche Schraffierungen und in entgegengesetzte Richtung verlaufende, die Feldlinienrichtung andeutende Pfeile, dargestellt.

Für einen derart ausgestalteten Reluktanzmotor gilt nun, daß die optimale Funktion dann gewährleistet ist, wenn die Differenz der Anzahl der Winkelbereiche 12, 9 im Ständer 1 und im Läufer 3 einem ganzzahligen Vielfachen der Polpaarzahl - vorzugsweise der einfachen Polpaarzahl - der Drehstromständerwicklung entspricht. Bei dem dargestellten fünften Ausführungsbeispiel weist der Ständer 1 eine 4-polige Drehstromständerwicklung mit der Lochzahl q=3 auf. Die Anzahl der Winkelbereiche 12 auf dem Ständer 1 beträgt neun, während die Anzahl der Winkelbereiche 9 auf dem Läufer 3 insgesamt elf beträgt. Bei dem in Fig. 5 dargestellten fünften Ausführungsbeispiel handelt es sich also in Bezug auf die Differenz zwischen der Anzahl der Winkelbereiche 12, 9 auf dem Ständer 1 und dem Läufer 3 um ein optimales Beispiel, da die Differenz der einfachen Polpaarzahl, hier zwei, entspricht. Das Untersetzungsverhältnis des in Fig. 5 dargestellten fünften Ausführungsbeispiels ergibt sich aus der angegebenen Formel zu 1:11.

In Fig. 5a) ist deutlich erkennbar, daß die aus ferromagnetischem Material bestehenden, in unmittelbarer Nähe zu den Rückschlußelementen des Läufers 3 angeordneten Flußführungsbereiche 10 in Hauptrichtung des Drehfeldes etwa so hoch wie breit sind. Es hat sich in der Praxis gezeigt, daß dieses Höhen/Breitenverhältnis für aus ferromagnetischem Material bestehende Flußführungsbereiche, die aus permanentmagnetischem Material bestehenden Flußführungsbereichen gegenüberstehen, das optimale Verhältnis von Nennmoment und Materialaufwand darstellt.

Die bei dem fünften Ausführungsbeispiel verwirklichte Ausbildung der Flußführungsbereiche aus Permanentmagneten ist dahingehend vorteilhaft, daß sie bei gleichem Ständerumfang ein höheres Nennmoment gewährleistet und gleichzeitig eine relativ einfache Nachrüstung eines Ständers eines konventionellen Synchron- oder Asynchronmotors möglich ist.

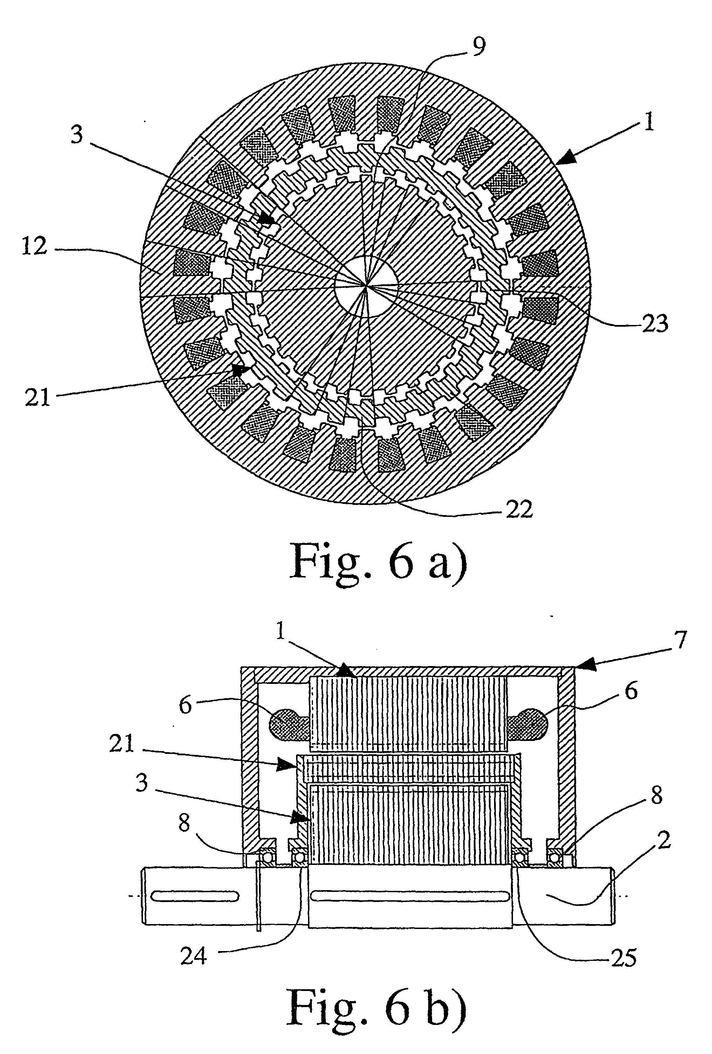

Fig. 6 der Zeichnung zeigt ein sechstes Ausführungsbeispiel eines erfindungsgemäßen Reluktanzmotors bei dem zwischen dem Ständer 1 und dem Läufer 3 ein auf der Welle 2 schwimmend gelagerter Untersetzungsläufer 21 angeordnet ist. Bei dem dargestellten Ausführungsbeispiel weist der Läufer 3 achtundzwanzig Winkelbereiche 9, der Ständer 1 vierundzwanzig Winkelbereiche 12, die dem Ständer 1 zugewandte Fläche des Untersetzungsläufers 21 achtundzwanzig Winkelbereiche 22 und die dem Läufer 3 zugewandte Fläche zweiunddreißig Winkelbereiche 23 auf. Somit stimmt die Differenz der Anzahl der Winkelbereiche 12 auf dem Ständer 1 und der Anzahl der Winkelbereiche 22 auf der dem Ständer 1 zugewandten Fläche des Untersetzungsläufers 21 mit der Differenz der Anzahl der Winkelbereiche 23 auf der dem Läufer 3 zugewandten Fläche des Untersetzungsläufers 21 und der Anzahl der Winkelbereiche 9 auf dem Läufer 3 und der Polzahl der Drehstromständerwicklung überein.

Eine mögliche Ausführung der schwimmenden Lagerung des Untersetzungsläufers 21 auf der Welle 2 über zusätzliche Lager 24, 25 ist in Fig. 6 b) dargestellt. Auch die Anordnung von zwei Untersetzungsläufern für extrem hohe Untersetzungsverhältnisse ist machbar.

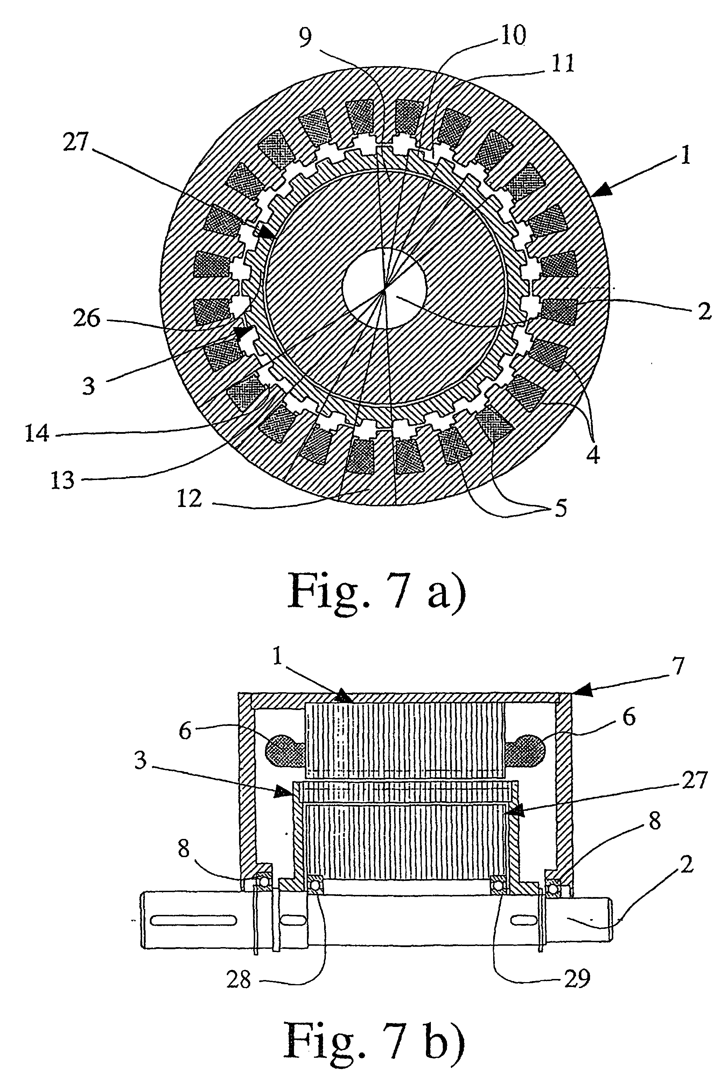

In Fig. 7 ist ein siebtes Ausführungsbeispiel eines erfindungsgemäßen Reluktanzmotors dargestellt. Bei diesem Ausführungsbeispiel umfaßt der als Innenläufer ausgebildete Läufer 3 des dargestellten Ausführungsbeispiels die Flußführungsbereiche 10, 11 und als Verbindungselement zur Verbindung mit der Welle 2 einen Zylindermantel 26. Gleichzeitig ist auf der Welle 2 ein Flußführungsläufer 27 aus ferromagnetischem Material zum Rückschluß der Feldlinien des magnetischen Drehfeldes vorgesehen. Der Flußführungsläufer 27 ist entsprechend als Vollzylinder ausgebildet. Eine Möglichkeit für eine drehfeste Verbindung des als Hohlzylinder ausgebildeten Läufers 3 und einer schwimmenden Lagerung des Flußführungsläufers 27 auf der Welle 2 ist aus Fig. 7 b) ersichtlich. Hierbei ist der Flußführungsläufer 27 über zusätzliche Lager 28, 29 auf der Welle 2 gelagert.

Die sonstige Ausgestaltung des in Fig. 7 dargestellten siebten Ausführungsbeispiels eines erfindungsgemäßen Reluktanzmotors entspricht im Hinblick auf die Drehstromständerwicklung und die Anzahl der Winkelbereiche 12, 9 auf dem Ständer 1 und dem Läufer 3 dem in Fig. 1 dargestellten ersten Ausführungsbeispiel. Entsprechend ergibt sich auch ein übereinstimmendes Untersetzungsverhältnis. Der Unterschied zwischen dem in Fig. 7 dargestellten Ausführungsbeispiel und dem in Fig. 1 dargestellten ersten Ausführungsbeispiel besteht somit ausschließlich in dem reduzierten Trägheitsmoment des Läufers 3, welches das dynamische Intrittfallen des Läufers 3 verbessert.

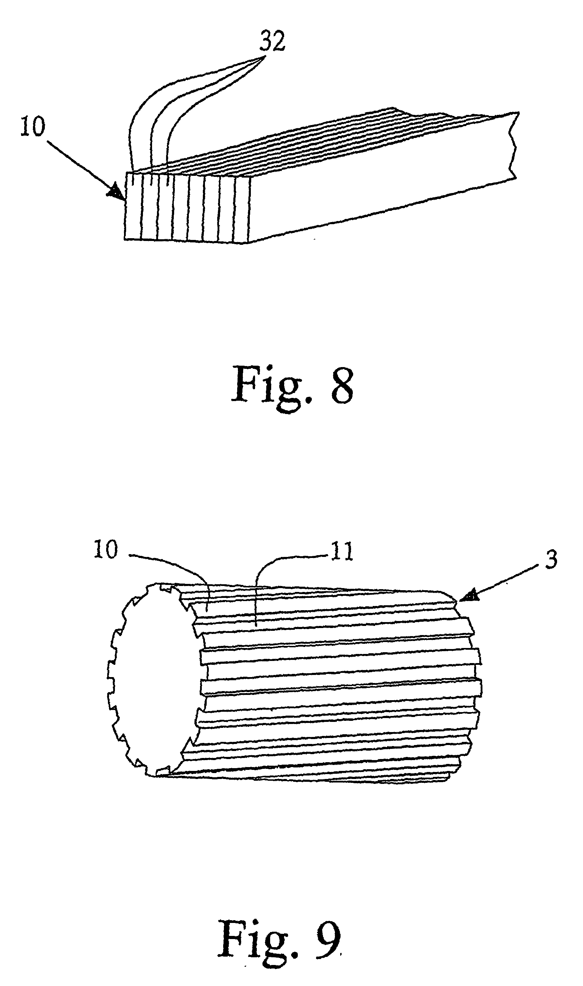

In Fig. 8 ist losgelöst von einem konkreten Ausführungsbeispiel ein aus ferromagnetischem Material bestehender Flußführungsbereich 10, 13 dargestellt, der aus gegeneinander isolierten Elektroblechen 32 aufgebaut ist. Um die Wirbelstromverluste zu reduzieren, liegen die Berührungsebenen der Elektrobleche 22 in Hauptrichtung des magnetischen Drehfeldes.

Ein Ausführungsbeispiel eines Läufers 3, bei dem die Flußführungsbereiche 10, 11 in Drehrichtung geschrägt verlaufen, ist in Fig. 9 dargestellt.

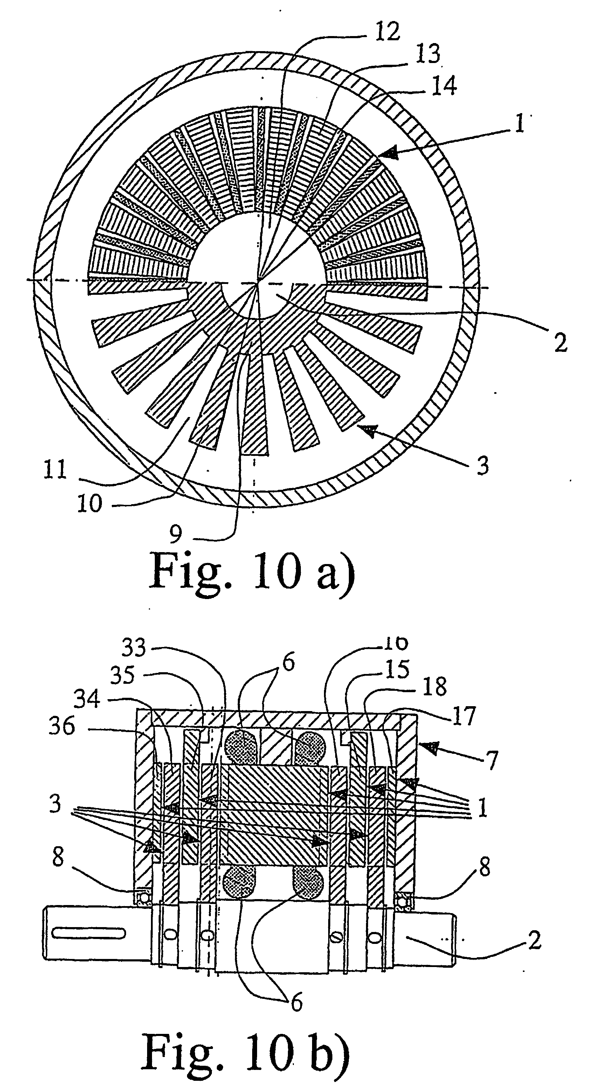

In Fig. 10 ist ein achtes Ausführungsbeispiel eines erfindungsgemäßen Reluktanzmotors dargestellt, bei dem der Ständer 1 und der Läufer 3 einen radialen Luftspalt einschließen. Es handelt sich bei dem dargestellten Ausführungsbeispiel also um einen sogenannten Scheibenläufer.

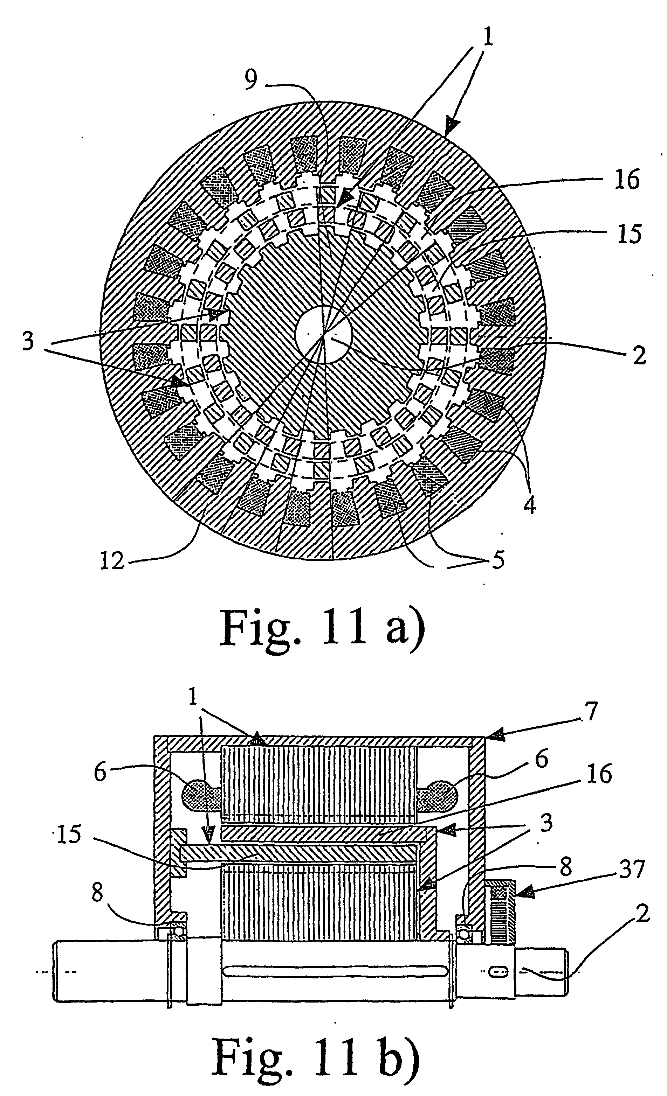

Bei dem in Fig. 10 dargestellten Scheibenläufer ist die Drehstromständerwicklung 4-polig mit einer Lochzahl von q=2 ausgeführt, wie aus der oberen Hälfte von Fig. 10a) ersichtlich ist. Aus dieser oberen Hälfte ist weiter ersichtlich, daß die Anzahl der Winkelbereiche 12 auf dem Ständer 1 vierundzwanzig beträgt. Aus dem in der unteren Hälfte der Fig. 10a) dargestellten Teilansicht des Läufers 3 ist weiter ersichtlich, daß die Anzahl der Winkelbereiche 9 auf dem Läufer 3 zwanzig beträgt. Entsprechend ist das Untersetzungsverhältnis des in Fig. 11 dargestellten achten Ausführungsbeispiels 1:10.

Aus Fig., 10b) ergibt sich, daß bei dem achten Ausführungsbeispiel eines Reluktanzmotors gemäß der ersten Lehre der Erfindung der Läufer 3 aus insgesamt vier Lagen 16, 18, 33, 34 aufgebaut ist. Entsprechend weist auch der Ständer 1, ohne die Drehstromständerwicklung mitzuzählen, vier Lagen 15, 17, 35, 36 auf. Die Lagenanzahl und Anordnung des achten Ausführungsbeispiels ist bis auf die symmetrische Verdopplung mit dem in Fig. 4 dargestellten vierten Ausführungsbeispiel vergleichbar.

Das in Fig. 11 dargestellte neunte Ausführungsbeispiel eines erfindungsgemäßen Reluktanzmotors entspricht in seinem Aufbau zunächst vollständig dem in Fig. 3 dargestellten dritten Ausführungsbeispiel. Das neunte Ausführungsbeispiel ist gegenüber dem dritten Ausführungsbeispiel lediglich um einen zwischen der Welle 2 und dem Gehäuse 7 angeordneten Geber oder Resolver 37 erweitert. Dieser Geber oder Resolver 37 ermöglicht die Ermittlung der Belastung des Reluktanzmotors aus der Phasenverschiebung zwischen dem Läufer und dem magnetischen Drehfeld. Aus der bekannten Belastung des Reluktanzmotors bestimmt dann eine nicht dargestellte Steuereinheit die notwendige Frequenzänderung des Drehfeldes, die über einen ebenfalls nicht dargestellten Frequenzumsetzer gewährleistet wird. Bei geeigneter Ansteuerung ergibt sich somit eine einem Gleichstrommotor entsprechende Kennlinie des erfindungsgemäßen Reluktanzmotors.

**Patentansprüche**

1. Reluktanzmotor mit einem eine Drehstromständerwicklung aufweisenden Ständer (1) zur Erzeugung eines magnetischen Drehfeldes und einem vorwiegend aus ferromagnetischem Material bestehenden, auf einer Welle (2) angeordneten Läufer (3), wobei der Läufer (3) in einer vorgegebenen Anzahl von in Umfangsrichtung aneinander anschließenden Winkelbereichen (9) gleichen Umfangswinkels vorzugsweise jeweils mindestens ein Paar von dem Ständer (1) zugewandten Flußführungsbereichen (10, 11) mit in Hauptrichtung des Drehfeldes unterschiedlichen Flußführungseigenschaften aufweist, daß der Ständer (1) in einer vorgegebenen Anzahl von in Umfangsrichtung aneinander anschließenden Winkelbereichen (12) gleichen Umfangswinkels vorzugsweise jeweils mindestens ein Paar von dem Läufer (3) zugewandten Flußführungsbereichen (13, 14) mit in Hauptrichtung des Drehfeldes unterschiedlichen Flußführungseigenschaften aufweist, **dadurch gekennzeichnet, daß** die Anzahl der Winkelbereiche (12) auf dem Ständer (1) sich von der Anzahl der Winkelbereiche (9) auf dem Läufer (3) um ein ganzzahliges Vielfaches der Polzahl - vorzugsweise der einfachen Polzahl - der Drehstromständerwicklung unterscheidet und daß die Flußführungsbereiche (10, 11, 13, 14) unterschiedlicher Flußführungseigenschaften abwechselnd durch Luft und ferromagnetisches Material von Ständer (1) und Läufer (3) gebildet sind.

2. Reluktanzmotor nach Anspruch 1, **dadurch gekennzeichnet, daß** die Anzahl der Winkelbereiche (12) des Ständers (1) der Zahl der Nuten (4) der Drehstromständerwicklung entspricht.

3. Reluktanzmotor nach Anspruch 1 oder 2, **dadurch gekennzeichnet, daß** die Drehstromständerwicklung 2- oder 4-polig ausgeführt ist.

4. Reluktanzmotor nach einem der Ansprüche 1 bis 3, **dadurch gekennzeichnet, daß** die Anzahl der Winkelbereiche (12, 9) auf dem Ständer (1) und dem Läufer (3) deutlich - vorzugsweise mindestens um den Faktor 5 - größer ist als die Polzahl der Drehstromständerwicklung.

5. Reluktanzmotor nach einem der Ansprüche 1 bis 4, **dadurch gekennzeichnet, daß** die Breiten der Flußführungsbereiche (10, 11, 13, 14) unterschiedlicher Flußführungseigenschaften auf dem Bauteil (1, 3) mit der höchsten Anzahl von Winkelbereichen (12, 9) im wesentlichen übereinstimmen und daß die Breiten der durch ferromagnetisches Material gebildeten Flußführungsbereiche (9, 12) auf den verbleibenden Bauteilen (3, 1) den Breiten auf dem Bauteil (1, 3) mit der höchsten Anzahl von Winkelbereichen (12, 9) entspricht.

6. Reluktanzmotor nach einem der Ansprüche 1 bis 5, **dadurch gekennzeichnet, daß** der Ständer (1) und der Läufer (3) jeweils mindestens eine weitere Lage (15, 16) von Flußführungsbereichspaaren (13, 14, 10, 11) mit in Hauptrichtung des Drehfeldes abwechselnd unterschiedlichen Flußführungseigenschaften aufweisen und daß die Lagen (15, 16) von Ständer (1) und Läufer (3) abwechselnd aufeinander folgen.

7. Reluktanzmotor nach Anspruch 6, **dadurch gekennzeichnet, daß** die aus ferromagnetischem Material bestehenden zwischen zwei weiteren Lagen des Läufers (3) oder Ständers (1) liegenden Flußführungsbereiche (10, 11, 13, 14) einer Lage (15, 16) des Ständers (1) oder Läufers (3) in der Hauptrichtung des Drehfeldes etwa so hoch wie breit sind.

8. Reluktanzmotor nach einem der Ansprüche 1 bis 7, **dadurch gekennzeichnet, daß** die aus ferromagnetischem Material bestehenden in unmittelbarer Nähe zu den Rückschlußelementen von Ständer (1) oder Läufer (3) angeordneten Flußführungsbereiche (13, 10) des Ständers (1) und/oder des Läufers (3) in der Hauptrichtung des Drehfeldes etwa halb so hoch wie breit sind.

9. Reluktanzmotor nach einem der Ansprüche 1 bis 8, **dadurch gekennzeichnet, daß** der Läufer (3) als Außenläufer ausgebildet ist.

10. Reluktanzmotor mit einem eine Drehstromständerwicklung aufweisenden Ständer (1) zur Erzeugung eines magnetischen Drehfeldes und einem vorwiegend aus ferromagnetischem Material bestehenden, auf einer Welle (2) angeordneten Läufer (3), wobei der Läufer (3) in einer vorgegebenen Anzahl von in Umfangsrichtung aneinander anschließenden Winkelbereichen (9) gleichen Umfangswinkels vorzugsweise jeweils mindestens ein Paar von dem Ständer (1) zugewandten Flußführungsbereichen (10, 11) mit in Hauptrichtung des Drehfeldes unterschiedlichen Flußführungseigenschaften aufweist, daß der Ständer (1) in einer vorgegebenen Anzahl von in Umfangsrichtung aneinander anschließenden Winkelbereichen (12) gleichen Umfangswinkels vorzugsweise jeweils mindestens ein Paar von dem Läufer (3) zugewandten Flußführungsbereichen (13, 14) mit in Hauptrichtung des Drehfeldes unterschiedlichen Flußführungseigenschaften aufweist, **dadurch gekennzeichnet, daß** die Anzahl der Winkelbereiche (12) auf dem Ständer (1) sich von der Anzahl der Winkelbereiche (9) auf dem Läufer (3) um ein ganzzahliges Vielfaches der Polzahl der Drehstromständerwicklung unterscheidet, daß die Flußführungsbreiche (10, 11, 13, 14) unterschiedlicher Flußführungseigenschaften durch in Hauptrichtung des Drehfeldes entgegengesetzt gepolte, entweder am Ständer (1) angeordnete Permanentmagnete gebildet sind, wobei die Flußführungsbereiche (13, 14) am Läufer (3) abwechselnd durch Luft und ferromagnetisches Material gebildet sind, oder am Läufer (3) angeordnete Permanentmagnete gebildet sind, wobei die Flußführungsbereiche (10, 11) am Ständer (1) abwechselnd durch Luft und ferromagnetisches Material gebildet sind.

11. Reluktanzmotor nach Anspruch 10, **dadurch gekennzeichnet, daß** die Differenz der Anzahl der Winkelbereiche (12, 9) auf dem Ständer (1) und auf dem Läufer (3) einem ganzzahligen Vielfachen der Polpaarzahl - vorzugsweise der einfachen Polpaarzahl - der Drehstromständerwicklung entspricht.

12. Reluktanzmotor nach Anspruch 10 oder 11, **dadurch gekennzeichnet, daß** die aus ferromagnetischem Material bestehenden, in unmittelbarer Nähe zu den Rückschlußelementen von Ständer (1) oder Läufer (3) angeordneten Flußführungsbereiche (10, 11), die Flußführungsbereiche (13, 14) bestehend aus in Hauptrichtung des Drehfeldes entgegengesetzt gepolten Permanentmagneten am Läufer (3) oder Ständer (1) zugeordnet sind, in Hauptrichtung des Drehfeldes etwa so hoch wie breit sind.

13. Reluktanzmotor nach einem der Ansprüche 1 bis 12, **dadurch gekennzeichnet, daß** zwischen Ständer (1) und Läufer (3) ein auf der Welle (2) schwimmend gelagerter Untersetzungsläufer (21) angeordnet ist, daß der Untersetzungsläufer (21) auf seiner dem Ständer (1) zugewandten Fläche in einer vorgegebenen Anzahl von in Umfangsrichtung aneinander anschließenden Winkelbereichen (22) gleichen Umfangswinkels vorzugsweise jeweils ein Paar von Flußführungsbereichen mit in Hauptrichtung des Drehfeldes unterschiedlichen Flußführungseigenschaften aufweist, daß der Untersetzungsläufer (21) auf seiner dem Läufer (3) zugewandten Fläche in einer vorgegebenen Anzahl von in Umfangsrichtung aneinander anschließenden Winkelbereichen (23) gleichen Umfangswinkels vorzugsweise jeweils ein Paar von Flußführungsbereichen mit in Hauptrichtung des Drehfeldes unterschiedlichen Flußführungseigenschaften aufweist und daß die Differenz der Anzahl der Winkelbereiche (12) auf dem Ständer (1) und der Anzahl der Winkelbereiche (22) auf der dem Ständer (1) zugewandten Fläche des Untersetzungsläufers (21) der Differenz der Anzahl der Winkelbereiche (23) auf der dem Läufer (3) zugewandten Fläche des Untersetzungsläufers (21) und der Anzahl der Winkelbereiche (9) auf dem Läufer (3) und einem ganzzahligen Vielfachen der Polzahl - vorzugsweise der einfachen Polzahl - der Drehstromständerwicklung entspricht.

14. Reluktanzmotor nach einem der Ansprüche 1 bis 13, **dadurch gekennzeichnet, daß** der Läufer (3) die Flußführungsbereiche (10, 11) und Verbindungselemente zur Verbindung mit der Welle (2) umfaßt und daß ein auf der Welle (2) schwimmend gelagerter Flußführungsläufer (27) aus ferromagnetischem Material zum Rückschluß der Feldlinien des Drehfeldes vorgesehen ist.

15. Reluktanzmotor nach Anspruch 14, **dadurch gekennzeichnet, daß** der Läufer (3) als Innenläufer ausgebildet ist, daß der Innenläufer als Hohlzylinder ausgebildet ist und daß innerhalb des Innenläufers der auf der Motorwelle schwimmend gelagerte, als Vollzylinder ausgebildete Flußführungsläufer (27) aus ferromagnetischem Material vorgesehen ist.

16. Reluktanzmotor nach einem der Ansprüche 1 bis 15, **dadurch gekennzeichnet, daß** die aus ferromagnetischem Material bestehenden Flußführungsbereiche (10, 13) aus gegeneinander isolierten Elektroblechen (32) aufgebaut sind.

17. Reluktanzmotor nach einem der Ansprüche 1 bis 16, **dadurch gekennzeichnet, daß** die Flußführungsbereiche (13, 14, 10, 11) im Ständer (1) und/oder im Läufer (3) in Drehrichtung geschrägt verlaufen.

18. Reluktanzmotor nach einem der Ansprüche 1 bis 17, **dadurch gekennzeichnet, daß** Ständer (1) und Läufer (3) einen radialen Luftspalt einschließen.

19. Reluktanzmotor nach einem der Ansprüche 1 bis 18, **dadurch gekennzeichnet, daß** auf der Welle (2) ein Geber oder Resolver (37) angeordnet ist.

**Claims**

1. Reluctance motor with stator (1) comprising a three-phase current stator winding for generating a rotary magnetic field and a rotor (3) which is located on a shaft (2) and is made primarily of ferromagnetic material, the rotor (3) having a predetermined number of angular regions (9) of the same peripheral angle extent which adjoin one another in the circumferential direction preferably each having at least one pair of flux guidance regions (10, 11) facing the stator (1), with flux guidance properties which differ in the main direction of the rotary field, the stator (1) having a predetermined number of-angular regions (12) of the same peripheral angle extent which adjoin one another in the circumferential direction preferably each having at least one pair of flux guidance regions (13, 14) facing the rotor (3) with flux guidance properties which differ in the main direction of the rotary field, **characterised in that** and that the number of angular regions (12) on stator (1) differs from the number of angular regions (9) on rotor (3) by an integral multiple of the pole number, preferably the simple pole number, of the three-phase current stator winding and that flux guidance regions (10, 11, 13, 14) of different flux guidance properties are formed alternately by air and the ferromagnetic material of stators (1) and rotors (3).

2. Reluctance motor as claimed in claim 1, wherein the number of angular regions (12) of stator (1) corresponds to the number of slots (4) of the three-phase current stator winding.

3. Reluctance motor as claimed in claim 1 or 2, wherein the three-phase current stator winding is made with 2 or 4 poles.

4. Reluctance motor as claimed in one of claims 1 through 3, wherein the number of angular regions (12, 9) on stator (1) and rotor (3) is clearly greater, preferably by a factor of at least 5, than the pole number of the three-phase current winding.

5. Reluctance motor as claimed in one of claims 1 through 4, wherein the widths of flux guidance regions (10, 11, 13, 14) of different flux guidance properties on the component (1, 3) with the highest number of angular regions (12, 9) essentially agree, and wherein the widths of flux guidance regions (9, 12) formed by ferromagnetic material on remaining components (3, 1) corresponds to the widths on the component (1, 3) with the highest number of angular regions (12, 9).

6. Reluctance motor as claimed in one of claims 1 through 5, wherein stator (1) and rotor (3) each have at least one other layer (15, 16) of flux guidance region pairs (13, 14, 10, 11) with flux guidance properties which differ alternately in the main direction of the rotary field, and wherein layers (15, 16) of stator (1) and/or rotor (3) follow one another alternately in succession.

7. Reluctance motor as claimed in claim 6, wherein flux guidance regions (10, 11, 13, 14) of one layer (15, 16) of stator (1) or rotor (3) which consist of ferromagnetic material and which lie between the two other layers of rotor (3) or stator (1) are roughly as high as wide in the main direction of the rotary field.

8. Reluctance motor as claimed in one of claims 1 through 7, wherein flux guidance regions (13, 10) of stator (1) and/or rotor (3) which are located in the immediate vicinity of the return elements of stator (1) and/or rotor (3) and which consist of ferromagnetic material are roughly half as high as wide in the main direction of the rotary field.

9. Reluctance motor as claimed in one of claims 1 through 8, wherein rotor (3) is made as an external rotor.

10. Reluctance motor with stator (1) comprising a three-phase current stator winding for generating a rotary magnetic field and a rotor (3) which is located on a shaft (2) and is made primarily of ferromagnetic material, the rotor (3) having a predetermined number of angular regions (9) of the same peripheral angle extent which adjoin one another in the circumferential direction preferably each having at least one pair of flux guidance regions (10, 11) facing the stator (1), with flux guidance properties which differ in the main direction of the rotary field, the stator (1) having a predetermined number of angular regions (12) of the same peripheral angle extent which adjoin one another in the circumferential direction preferably each having at least one pair of flux guidance regions (13, 14) facing the rotor (3) with flux guidance properties which differ in the main direction of the rotary field, **characterised in that** and that the number of angular regions (12) on stator (1) differs from the number of angular regions (9) on rotor (3) by an integral multiple of the pole number, preferably the simple pole number, of the three-phase current stator winding and the flux guidance regions (10, 11, 13, 14) of different flux guidance properties are formed by permanent magnets polarized oppositely in the main direction of the rotary field which are located either on the stator (1), whereby the flux guidance regions (13, 14) on the rotor (3) are formed alternately by air and the ferromagnetic material, or located on the rotor (3), whereby the flux guidance regions (10, 11) on the stator (1) are formed alternately by air and the ferromagnetic material.

11. Reluctance motor as claimed in claim 10, wherein the difference of the number of angular regions (12, 9) on stator (1) and rotor (3) corresponds to an integral multiple of the number of pole pairs, preferably the simple pole pair number, of the three-phase current stator winding.

12. Reluctance motor as claimed in claims 10 or 11, wherein ferromagnetic flux guidance regions (10, 11) which are located in the immediate vicinity of the return elements of stators (1) or rotors (3), which are assigned flux guidance regions (13, 14) consisting of permanent magnets on rotor (3) or stator (1) which are polarized oppositely in the main direction of the rotary field, are roughly as high as wide in the main direction of the rotary field.

13. Reluctance motor as claimed in one of claims 1 through 12, wherein a reduction rotor (21) floating on the shaft (2) is located between stator (1) and rotor (3), wherein reduction rotor (21) on its surface facing stator (1) having a predetermined number of angular regions (22) of the same peripheral angle extent which adjoin one another in the circumferential direction each preferably comprising one pair of flux guidance regions with flux guidance properties which differ in the main direction of the rotary field, wherein reduction rotor (21) on its surface facing rotor (3) having a predetermined number of angular regions (23) of the same peripheral angle extent which adjoin one another in the circumferential direction each preferably has one pair of flux guidance regions with flux guidance properties which differ in the main direction of the rotary field, and wherein the difference of the number of angular regions (12) on stator (1) and the number of angular regions (22) on the surface of reduction rotor (21) facing stator (1) corresponds to the difference of the number of angular regions (23) on the surface of reduction rotor (21) facing rotor (3) and the number of angular regions (9) on rotor (3) and to an integral multiple of the pole number, preferably the simple pole number, of the three-phase current stator winding.

14. Reluctance motor as claimed in one of claims 1 through 14, **characterised in that** the rotor (3) comprises flux guidance regions (10, 11) and connecting elements for connection to shaft (2), and that a flux guidance rotor (27) is provided which floats on shaft (2) and which consists of ferromagnetic material for return of the lines of force of the rotary field.

15. Reluctance motor as claimed in claim 14, wherein rotor (3) is made as an internal rotor, wherein the internal rotor is made as a hollow cylinder, and wherein within the internal rotor a ferromagnetic material flux guidance rotor (27) is provided made as a solid cylinder and supported to float on the motor shaft.

16. Reluctance motor as claimed in one of claims 1 through 15, wherein flux guidance regions (10, 13) consisting of ferromagnetic material are advantageously built up from magnetic steel sheets (32) which are insulated from one another.

17. Reluctance motor as claimed in one of claims 1 through 16, wherein flux guidance regions (13, 14, 10, 11) in stator (1) and/or in rotor (3) run inclined in the direction of rotation.

18. Reluctance motor as claimed in one of claims 1 through 17, wherein stator (1) and rotor (3) include a radial air gap.

19. Reluctance motor as claimed in one of claims 1 through 18, wherein on the shaft (2) a transducer or a resolver (37) is located.


## Revendications

1. Moteur à réluctance, comprenant un stator (1) comprenant un enroulement triphasé de stator, destiné à créer un champ magnétique rotatif, et un rotor (3) constitué principalement de matière ferromagnétique, monté sur un arbre (2), le rotor (3) comportant de préférence, dans chacune d'un nombre prédéterminé de zones angulaires (9) d'angles périphériques égaux, se succédant dans le sens de la circonférence, respectivement au moins une paire de parties (10, 11) de guidage de flux faisant face au stator (1), ayant des caractéristiques de guidage de flux qui diffèrent dans la direction principale du champ rotatif, le stator (1) comportant de préférence, dans chacune d'un nombre prédéterminé de zones angulaires (12) d'angles périphériques égaux, se succédant dans le sens de la circonférence, respectivement au moins une paire de parties (13, 14) de guidage de flux faisant face au rotor (3), ayant des caractéristiques de guidage du flux qui diffèrent dans la direction principale du champ rotatif, **caractérisé en ce que**

le nombre de zones angulaires (12) du stator (1) se distingue du nombre de zones angulaires (9) du rotor (3) d'un multiple entier du nombre de pôles - de préférence du nombre simple de pôles - de l'enroulement triphasé du stator, et **en ce que** les parties (10, 11, 13, 14) de guidage de flux aux caractéristiques différentes de guidage du flux sont constituées par une alternance d'air et de matière ferromagnétique du stator (1) et du rotor (3).

2. Moteur à réluctance selon la revendication 1, **caractérisé en ce que** le nombre de zones angulaires (12) du stator (1) correspond au nombre de rainures (4) de l'enroulement triphasé du stator.

3. Moteur à réluctance selon la revendication 1 ou 2, **caractérisé en ce que** l'enroulement triphasé statorique est réalisé sous une forme bipolaire ou quadripolaire.

4. Moteur à réluctance selon l'une des revendications 1 à 3, **caractérisé en ce que** le nombre de zones angulaires (12, 9) du stator (1) et du rotor (3) est nettement plus élevée - de préférence d'un facteur 5 au moins - que le nombre de pôles de l'enroulement triphasé statorique.

5. Moteur à réluctance selon l'une des revendications 1 à 4, **caractérisé en ce que** les largeurs des parties (10, 11, 13, 14) de guidage de flux aux caractéristiques différentes de guidage du flux de l'élément (1, 3) ayant le plus grand nombre de zones angulaires (12, 9) sont essentiellement égales, et **en ce que** les largeurs des parties (9, 12) de guidage de flux formées par de la matière ferromagnétique des éléments restants (3, 1) correspondent aux largeurs existant sur l'élément (1, 3) ayant le plus grand nombre de parties angulaires (12, 9).

6. Moteur à réluctance selon l'une des revendications 1 à 5, **caractérisé en ce que** le stator (1) et le rotor (3) comportent chacun au moins une autre couche (15, 16) de paires de parties de guidage de flux (13, 14, 10, 11) ayant des caractéristiques de guidage alternant dans la direction principale du champ rotatif, et que les couches (15, 16) du stator (1) et du rotor (3) se succèdent en alternance.

7. Moteur à réluctance selon la revendication 6, **caractérisé en ce que** les parties (10, 11, 13, 14) de guidage de flux constituées de matière ferromagnétique d'une couche (15, 16) du stator (1) ou du rotor (3), situées entre deux autres couches du rotor (3) ou du stator (1) présentent, dans la direction principale du champ rotatif, une hauteur à peu près égale à leur largeur.

8. Moteur à réluctance selon l'une des revendications 1 à 7, **caractérisé en ce que** la hauteur des parties (13, 10) de guidage de flux du stator (1) et/ou du rotor (3), qui sont constituées de matière ferromagnétique et sont disposées à proximité immédiate des éléments de bouclage des stator (1) ou rotor (3), est égale à la moitié environ de leur largeur, dans la direction principale du champ rotatif.

9. Moteur à réluctance selon l'une des revendications 1 à 8, **caractérisé en ce que** le rotor (3) est réalisé sous forme d'un rotor extérieur.

10. Moteur à réluctance comprenant un stator (1) comprenant un enroulement triphasé de stator, destiné à créer un champ magnétique rotatif, et un rotor (3) constitué principalement de matière ferromagnétique, monté sur un arbre (2), le rotor (3) comportant de préférence, dans chacune d'un nombre prédéterminé de zones angulaires (9) d'angles périphériques égaux, se succédant dans le sens de la circonférence, respectivement au moins une paire de parties (10, 11) de guidage de flux faisant face au stator (1), ayant des caractéristiques de guidage du flux qui diffèrent dans la direction principale du champ rotatif, le stator (1) comportant de préférence, dans chacune d'un nombre prédéterminé de zones angulaires (12) d'angles périphériques égaux, se succédant dans le sens de la circonférence, respectivement au moins une paire de parties (13, 14) de guidage de flux faisant face au rotor (3), ayant des caractéristiques de guidage du flux qui diffèrent dans la direction principale du champ rotatif, **caractérisé en ce que**

le nombre de zones angulaires (12) du stator (1) se distingue du nombre de zones angulaires (9) du rotor (3) d'un multiple entier du nombre de pôles de l'enroulement triphasé du stator, **en ce que** les parties (10, 11, 13, 14) de guidage de flux aux caractéristiques de guidage de flux différentes sont constituées d'aimants permanents aux polarités opposées dans la direction principale du champ rotatif, disposés sur le stator (1), les parties (13, 14) de guidage de flux du rotor étant alors constituées alternativement d'air et de matière ferromagnétique, ou sont constituées d'aimants permanents montés sur le rotor (3), les parties (10, 11) de guidage de flux du stator (1) étant alors constituées alternativement d'air et de matière ferromagnétique.

11. Moteur à réluctance selon la revendication 10, **caractérisé en ce que** la différence entre les nombres de zones angulaires (9, 12) du stator (1) et du rotor (3) correspond à un multiple entier du nombre de paires de pôles de l'enroulement triphasé statorique - de préférence à une fois le nombre de paires de pôles.

12. Moteur à réluctance selon la revendication 10 ou 11, **caractérisé en ce que** les parties (10, 11) de guidage de flux constituées de matière ferromagnétique, disposées à proximité immédiate des éléments de bouclage des stator (1) ou rotor (3), et les parties (13, 14) de guidage de flux constituées d'aimants permanents aux polarités opposées, montés sur le rotor (3) ou le stator (1), présentent, dans la direction principale du champ rotatif, une largeur à peu près égale à leur hauteur.

13. Moteur à réluctance selon l'une des revendications 1 à 12, **caractérisé en ce qu'**un rotor réducteur (21) monté flottant sur l'arbre (2) est disposé entre le stator (1) et le rotor (3),

    **en ce que** le rotor réducteur (21) comporte de préférence, du côté faisant face au stator (1), dans chacune d'un nombre prédéterminé de zones angulaires (22) d'angles périphériques égaux, se succédant dans le sens de la circonférence, une paire de parties de guidage de flux ayant des caractéristiques de guidage de flux qui diffèrent dans la direction principale du champ rotatif,

    **en ce que** le rotor réducteur (21) comporte de préférence, du côté faisant face au rotor (3), dans chacune d'un nombre prédéterminé de zones angulaires (23) d'angles périphériques égaux, se succédant dans le sens de la circonférence, une paire de parties de guidage de flux ayant des caractéristiques de guidage de flux qui diffèrent dans la direction principale du champ de rotation, et

    **en ce que** la différence entre le nombre de zones angulaires (12) du stator et le nombre de zones angulaires (22) du rotor réducteur (21) faisant face au stator (1) correspond à la différence entre le nombre de zones angulaires (23) du rotor réducteur (21) faisant face au rotor (3), et le nombre de zones angulaires (9) du rotor (3), et un multiple entier du nombre de pôles - de préférence une fois le nombre de pôles - de l'enroulement triphasé statorique.

14. Moteur à réluctance selon l'une des revendications 1 à 13, **caractérisé en ce que** le rotor (3) comprend les parties (10, 11) de guidage de flux et les éléments de liaison pour la liaison à l'arbre (2), et **en ce qu'**un rotor du guidage de flux (27) monté flottant sur l'arbre (2), réalisé en matière ferromagnétique, est prévu pour compléter le bouclage des lignes de flux du champ rotatif.

15. Moteur à réluctance selon la revendication 14, **caractérisé en ce que** le rotor (3) est réalisé sous forme d'un rotor intérieur, **en ce que** le rotor intérieur est réalisé sous forme d'un cylindre creux, et **en ce que** le rotor de guidage de flux (27) monté flottant sur l'arbre moteur, réalisé sous forme d'un cylindre plein fait en matière ferromagnétique, est logé à l'intérieur du rotor intérieur.

16. Moteur à réiuctance selon l'une des revendications 1 à 15, **caractérisé en ce que** les parties de guidage de flux (10, 13) constituées de matière ferromagnétique sont composées de tôles électriques (32) isolées les unes des autres.

17. Moteur à réluctance selon l'une des revendications 1 à 16, **caractérisé en ce que** les parties de guidage de flux (13, 14, 10, 11) du stator et/ou du rotor (3) s'étendent obliquement dans le sens de la rotation.

18. Moteur à réluctance selon l'une des revendications 1 à 17, **caractérisé en ce que** le stator (1) et le rotor (3) enferment entre eux un entrefer radial.

19. Moteur à réluctance selon l'une des revendications 1 à 18, **caractérisé en ce qu'**un capteur ou résolveur (37) est monté sur l'arbre (2).

Fig. 1 a)

Fig. 1 b)

Fig. 2 a)

Fig. 2 b)

Fig. 3 a)

Fig. 3 b)

Fig. 4 a)

Fig. 4 b)

Fig. 5 a)

Fig. 5 b)

Fig. 6 a)

Fig. 6 b)

Fig. 7 a)

Fig. 7 b)

Fig. 8

Fig. 9

Fig. 10 a)

Fig. 10 b)

Fig. 11 a)

Fig. 11 b)